(19) Europäisches Patentamt

European Patent Office

Office européen des brevets

(11) **EP 2 624 151 A1**

(12) **EUROPEAN PATENT APPLICATION**

(43) Date of publication:
**07.08.2013 Bulletin 2013/32**

(51) Int Cl.:
***G06F 17/30*** *(2006.01)*

(21) Application number: **13166481.5**

(22) Date of filing: **25.02.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br><br>(30) Priority: **25.02.2008 US 67162 P**<br>**12.12.2008 US 334389**<br>**12.12.2008 US 334416**<br><br>(62) Document number(s) of the earlier application(s) in accordance with Art. 76 EPC:<br>**09714387.9 / 2 260 408**<br><br>(71) Applicant: **Atigeo LLC**<br>**Bellevue, WA 98004 (US)** | (72) Inventors:<br>• **Sandoval, Michael**<br>**Kirkland, WA 98033 (US)**<br>• **Downs, Oliver Bruce**<br>**Redmond, WA 98053 (US)**<br><br>(74) Representative: **Klunker . Schmitt-Nilson . Hirsch**<br>**Patentanwälte**<br>**Destouchesstrasse 68**<br>**80796 München (DE)**<br><br>Remarks:<br>This application was filed on 03-05-2013 as a divisional application to the application mentioned under INID code 62. |

(54) **Electronic profile development, storage, use and systems for taking action based thereon**

(57) Examples of the present invention include profiling system that store, manage and respond to electronic profiles. The profiling system utilize attributes of the electronic profiles to take predictive or deterministic action, including identifying content to be provided and notification of selected content. Embodiments of the invention allow the profiling system to be used as a trusted intermediary where the profile owning entity controls access to their electronic profiles across their network of devices and services.

## Figure 1

**Description**

<u>TECHNICAL FIELD</u>

Embodiments of this invention relate to computing systems and software for the collection, development, analysis, and use of profile attributes.

<u>BACKGROUND</u>

Current systems for providing content items to users vary in their approach to user information, for example, in their ability to obtain meaningful information about their users and the extent to which their users control access to and use of their own information.

Some systems simply decide what may be appropriate for or desirable for users based on a single known data point about the user. For example, location based services receive location information from a user's mobile device and identify nearby businesses, gas stations, or ATMs. Other location-relevant information may be provided as well, such as local weather reports. However, the information is selected based only on the user's location. The system has no way of knowing if any of the identified businesses or facts are more relevant for the particular user than any other.

Some systems guess what may be appropriate or desirable for users based on a single action. For example, contextual advertising systems may provide an advertisement for a web page based in part on a target word in the web page. These systems have no way of knowing if the advertisement is actually relevant to the user viewing the web page - the advertisement is chosen simply because it matches a target word on the web page. Some systems decide what products may be desirable for a user based on ratings of other similar products provided by the user. For example, some recommendation services receive limited user ratings, or implicit ratings based on views or purchases, of a certain kind of product - books or movies for example - and recommend other books or movies that the user may like based on similarity to items favorably rated, such as authors, themes, actors, directors, genres, and the like, in certain instances by referring to the ratings views or purchases of groups of users similar to that user.

Location based systems, contextual advertising, and recommendation systems, are forced to decide what things may be relevant to them on the basis of the limited known information about a user. These systems may not achieve a high success rate of delivering information that is truly relevant to the user because the recommendations are based on limited available information explicitly shared with the system. The system does not know any other information about the user, including information collected by or shared with other systems. These systems, however, may allow the user to have control over their personal information. That is, the user has shared only a limited amount of personal information with the system.

Other systems may make more intelligent recommendations for users based on more detailed information about the user, but these systems may suffer from user privacy problems. For example, deep packet inspection technologies can analyze information sent to and from a user on a broadband network. By inspecting all information sent or received by a user over time, the Internet service provider can develop a clearer picture of the user and what may be relevant to them. However, this approach raises serious privacy concerns because the user may not know that their personal information is being collected, and does not control to whom the information is provided.

Advertising systems presenting advertisements to Internet browsers may choose advertisements to display in a variety of ways. A website may simply have sponsors, and sell advertisements in an analogous manner to the sale of advertising space in a newspaper or magazine. For example, contextual advertising systems may provide an advertisement for a web page based in part on a target word in the web page. These systems have no way of knowing if the advertisement is actually relevant to the user viewing the web page - the advertisement is chosen simply because it matches a target word on the web page. For example, Google may display advertisements based on words contained in a user's email message or search string. The advertisement is selected based on the content of the single email message being viewed. No other information about the user is available. Other systems may select advertisements to display based on the content of stored cookies associated with the user browsing the website. This may be done in some cases without the user's informed consent, raising privacy concerns for the user.

These previous systems also suffer from being proprietary to the particular website or electronic service accessed. For example, web sites such as Facebook, Ticketmaster, and ESPN, maintain some profile information associated with their users. However, the profile information stored by the user at one site is generally inaccessible to others, depriving the user of its benefit as they travel to other websites. Allowing one site to share information with others again raises privacy concerns. It often may be prohibitive for one system to obtain the necessary user consent to share profile information with another system.

BRIEF DESCRIPTION OF THE DRAWINGS

Figure 1 is a schematic diagram of a system according to an embodiment of the present invention.

Figure 2 is a schematic illustration of a conceptual database schema for an electronic profile according to an embodiment of the present invention.

Figure 3 is a schematic illustration of a profile management interface operating in a browser window of a display according to an embodiment of the present invention.

Figure 4 is a flowchart illustrating operation of a disambiguation engine according to an embodiment of the present invention.

Figure 5 is a flowchart illustrating operation of an indexing engine according to an embodiment of the present invention.

Figure 6 is a flowchart illustrating operation of a disambiguation engine according to an embodiment of the present invention.

Figure 7 is a flowchart illustrating operation of the profile management system according to an embodiment of the present invention.

Figure 8 is a flowchart illustrating operation of an analysis engine according to an embodiment of the present invention.

Figure 9 is a schematic illustration of a user interface according to an embodiment of the present invention.

Figure 10 is a schematic illustration of a user interface according to an embodiment of the present invention.

Figure 11 is a schematic illustration of a user interface according to an embodiment of the present invention.

Figure 12 is a schematic illustration of a system for selecting advertisements or other content according to an embodiment of the present invention.

Figure 13 is a schematic illustration of a web browser operating a plug-in according to an embodiment of the present invention.

Figure 14 is a schematic illustration of a web browser operating a plug-in according to an embodiment of the present invention.

Figure 15 is a flowchart illustrating operation of a system according to an embodiment of the present invention.

Figure 16 is a flowchart illustrating operation of the system of Figure 1 according to an embodiment of the present invention.

Figures 17A and 17B are flowcharts illustrating operation of the system of Figure 1 according to various embodiments of the present invention.

Figures 18A, 18B, and 18C are flowcharts illustrating operation of the system of Figure 1 according to various embodiments of the present invention.

Figures 19A, 19B, and 19C are flowcharts illustrating operation of the system of Figure 1 according to various embodiments of the present invention.

Figure 20 is a flowchart illustrating operation of the system of Figure 1 according to an embodiment of the present invention.

Figure 21 is a flowchart illustrating operation of the system of Figure 1 according to an embodiment of the present invention.

Figures 22A, 22B, 22C and 22D are schematic illustration of a user interface according to various embodiments of the invention.

DETAILED DESCRIPTION

Certain details are set forth below to provide a sufficient understanding of embodiments of the invention. However, it will be clear to one skilled in the art that embodiments of the invention may be practiced without various of these particular details. In some instances, well-known computer system components, network architectures, control signals, and software operations have not been shown in detail in order to avoid unnecessarily obscuring the described embodiments of the invention.

Embodiments of the invention provide a profiling system that may obtain, expand, manage, store, and use electronic profiles. Electronic profiles described herein include data structures containing information about an entity, all or a portion of which may be used as input to an analysis engine that may take a predictive or deterministic action based in part on the electronic profile. As will be described below, an entity may control the use of all or portions of their electronic profile, allowing it to be used in part or completely to score and select content responsive to requests from particular entities. The analysis engine uses information from the electronic profile to take a predictive or deterministic action. The term "profile" includes the electronic profile as well as some or all of the profile attributes of an electronic profile. The analysis engine may also use profile attributes from electronic profiles of other entities, such as creating a group profile based on profile attributes for a plurality of profile owning entities, For example, as will be described further below, products, services, content, organizations, people, or other items (including virtual items such as within a game, simulation or other virtual environment) that may be particularly relevant for the profile owning entity are suggested based on information in the electronic profile for the entity, information in the electronic profile for other entities, or a combination of the information. The entity may be a person or a group of people. The entity may be real or virtual. The entity may have multiple separate and distinct profiles. The entity may be a user or users of a system. The entity may also be a segment of people that share a common attribute. The entity may also be a segment of people that do or do not share a particular attribute or attributes. The entity may also be a thing such as, but not limited to, a product, place or item of content.

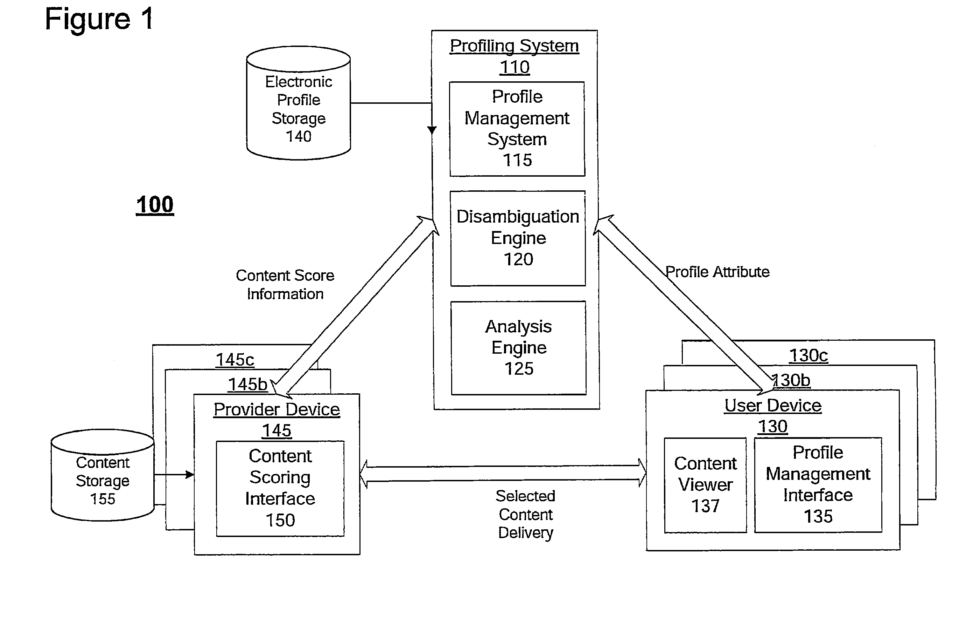

An example of a system 100 according to an embodiment of the present invention is shown in Figure 1. A profiling system 110 includes a profile management system 115, a disambiguation engine 120, and an analysis engine 125. These individual components will be discussed further below. The profiling system 110 generally includes a processor and memory to store computer readable instructions that may cause the processor to implement the functionalities of the profile management system 115, disambiguation engine 120, and analysis engine 125 described below. One or more of these engines may be implemented on a server or other computer or computing device, or network of computing devices. Although shown as a unitary system, the profiling system 110 may be implemented as distributed across a plurality of computing devices, with portions of the processing performed by each of the devices.

A user device 130, which may be implemented as any device with suitable processing, memory, and communication capabilities to implement a profile management interface 135 and content viewer 137, is in communication with the profiling system 110. The user device 130 may accordingly be, but is not limited to, a personal computer, kiosk, cell phone, personal digital assistant, television set-top box, television, or music player. The user device 130 may be specific to a single user, or may be used by multiple users, such as in the case of a publicly accessible workstation or kiosk. In some embodiments, the user need not be a physical person, but may be a representative of a group of people, or may be another automated process or computer program performing a profile entry functionality. Communication between the profiling system 110 and the user device 130 may occur through any mechanism. In some embodiments, the profiling system 110 may be implemented completely or partially as a web service that may communicate with the user device 130 over the Internet using http, in either a secure or unsecured manner, as desired. The user device 130 includes a content viewer 137 for viewing content, as will be described in more detail below. In some embodiments, the content viewer is an Internet browser program including but not limited to Internet Explorer, Mozilla, Safari, and Firefox. In some embodiments, the content viewer is a browser plug-in. The profile management interface 135 enables communication with the profile management system 115 to establish, augment, or otherwise manipulate profile attributes pertaining to an entity represented by a user using the user device 130. The disambiguation engine 120 may receive profile attributes supplied from the user device 130 and further process the information to reduce ambiguity, including noise and variation, in the information provided, as will be described further below. The processing to reduce ambiguity may occur dynamically through interaction with the user device. Any number of user devices may be in communication with the profiling system 110, including the user devices 130b and 130c shown in Figure 1.

Profile attributes received from the user device 130 and other sources is processed by the profile management system 115 and disambiguation engine 120 to generate electronic profiles that are stored in the electronic profile storage 140. As will be described further below, the electronic profiles may be database structures and accordingly may be stored in a database as shown in Figure 1. However, any type of electronic storage may be used to store electronic profiles and the profiles may be stored in any number of distinct storage locations, and individual profiles may be distributed across a plurality of storage locations. Electronic profiles will be discussed in greater detail below.

A content provider, or other entity seeking to interact with profile owning entities, may communicate with the profiling system 110 using a provider device 145. As with the user device 130, any device with suitable processing, memory, and communication capabilities to implement a content storing interface 150, may be used. Accordingly, the provider device 145 may be implemented as, but is not limited to, a server computer, personal computer, cell phone, personal digital assistant, set-top box, television, or kiosk. The provider device 145 may communicate with the profiling system 110 in any manner, wired or wireless.

The provider device 145 is in communication with content storage 155. The content storage 155 is any suitable electronic memory storage that contains information the provider may want to share with one or more profile owning entities. The content storage 155 may be, but is not limited to, storing news or entertainment content, such as text files or media files, databases, advertisements, social contacts, customer relationship management information, enterprise resource management information, catalog data, inventory, images, movies, charity information, sports information, medical information, documents, data, software code, logic (e.g., circuits, firmware), equations, or combinations of these types of information. Any number of provider devices may be in communication with the profiling system 110 including the provider devices 145b and 145c. The additional provider devices may have their own associated content storage, or may be in communication with the content storage 155.

The provider device 145 implements a content scoring interface 150 that may be implemented as a processor and a memory storing computer readable instructions causing the processor to implement the content scoring interface functionality described. Content scoring will be described further below, but as a general overview, the content scoring interface 150 makes some or all of the content in content storage 155 accessible to the analysis engine 125. The analysis engine 125 may then score content items based on one or more of the electronic profiles stored in electronic profile storage 140. The output of this process may be provided to the content scoring interface 150 in a variety of ways, including numerical scores assigned to content in the content storage 155 based on its relevance (and/or irrelevance) to the electronic profile or profiles consulted, or a ranked list of content in the content storage 155 listed in ascending or descending relevance order, or an indication of content items having a relevance score above or below a threshold relevance score. "Relevance" as used herein broadly includes the consideration of relevancy, the lack of relevancy (i.e., irrelevance), or combinations thereof.

An overview of the use of the system 100 according to an embodiment of the invention is now described, although further details are provided below. An entity may communicate profile attributes to the profiling system 110 through the profile management interface 135 in communication with the profile management system 115. The profile management system 115 and the disambiguation engine 120 may refine and expand the profile attributes provided. An electronic profile of the entity is stored in electronic profile storage 140. While a single electronic profile storage 140 location is shown in Figure 1, the electronic profile may in some embodiments be distributed across a plurality of storage locations, including across a plurality of storage locations associated with different physical electronic devices that may be used by an entity. Accordingly, in some embodiments, only a portion of the entity's profile may be located on the electronic profile storage 140. The entity may then request information from a provider. In Figure 1, the user device 130 is shown as communicating with the provider device 145. While the entity and the provider may communicate in some embodiments, as shown in Figure 1, using the same devices containing the profile management interface 135 and the content scoring interface 150, in other embodiments, the entity and the provider may communicate using different devices. On receiving a request for information from an entity, the provider device 145 through the content scoring interface 150 requests an analysis from the analysis engine 125. The analysis engine 125 accesses the entity's electronic profile stored in electronic profile storage 140 and, provided the entity has chosen to allow all or a portion of its profile attributes to be used responsive to a request from the provider, scores the content in the content storage 155 in accordance with the accessed electronic profile. The resultant scores are provided to the provider device 145 through the content scoring interface 150. Having received the scores, the provider may then communicate content to the entity based on the scores. For example, content can be selected by the provider based on the scores and provided for viewing by the entity on the content viewer 137.

In this manner, the profiling system 110 may serve as a trusted intermediary between an entity and a content provider. The content provider receives an analysis of its content based on an entity's profile attributes without actually receiving the profile attributes itself. Being able to control the accessibility of the profile attributes, and knowing content providers may not obtain the information directly, entities may share a greater amount of information with the profiling system 110. Further, through the profile management system 115 and disambiguation engine 120, the electronic profiles may be more structured while being easily created than those created purely through freeform user input. The disambiguation engine 120 may suggest related terms for addition to an entity's profile, that the entity may confirm or deny.

Having described an overview of an example of a system 100 according to the present invention, examples of electronic profiles will now be discussed. Electronic profiles described herein include data structures containing information about an entity, all or a portion of which may be used as input to an analysis engine that may take a predictive or deterministic action based in part on the electronic profile. For example, recall electronic profiles may be stored in the electronic profile storage 140 and used by the analysis engine 125 to identify content that may be relevant to the entity associated with the electronic profile.

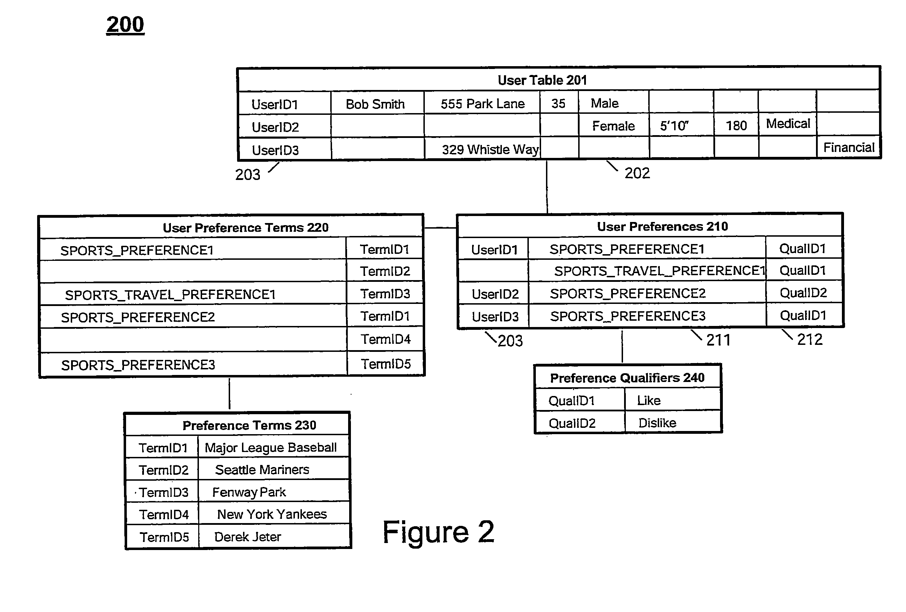

Examples of electronic profiles accordingly include data structures. Any type of data structure may be used that may store the electronic profile attributes described below. In one embodiment, the electronic profile is stored in a relational database. Figure 2 illustrates a portion of a conceptual database schema 200 for an electronic profile according to an embodiment of the present invention. The database schema 200 is organized as a star schema, but other organizations may be employed in other embodiments. The schema 200 includes several tables relating aspects of the electronic profile to one another that provide information about the entity owning the electronic profile. The database constructed according to the schema 200 may be stored on generally any suitable electronic storage medium. In some embodiments, portions of an electronic profile may be distributed amongst several electronic storage media, including among storage media associated with different electronic devices used by an entity.

Information stored in an electronic profile about an entity may include, but is not limited to any combination of the following: structured and unstructured data, preferences, possessions, social connections, images, permissions, recommendation preferences, location, role and context, real or virtual personas, schedules, tasks, weblinks, passwords, data stored in databases, and information managed by other entities, such as financial information, medical history, and billing information. These aspects of an entity may be used in any combination by an analysis engine to take predictive or deterministic action as generally described above. Examples of aspects of profile attributes included in the electronic profile 200 will now be described further.

The electronic profile represented by the schema 200 includes data about an entity in a user table 201. While the term 'user' is used in Figure 2 to describe tables and other aspects of the profile, the term is not meant to restrict profiles to individuals or human representatives. The information contained in an electronic profile is generally information about an entity associated with the electronic profile, which may also be referred to as the entity owning the electronic profile. An entity may generally own multiple distinct profiles. The entity may be a person or a group of people. The entity may also be a segment of people that share a common attribute. The entity may also be a thing such as, but not limited to, a product, place, business, or item of content. The entity may be a segment of things that share a common attribute. The term 'user' in Figure 2 simply refers to the entity associated with the profile. More generally, the term user may refer to a profile owning entity as described herein.

Data 202 about the entity stored in the user table 201. The table 201 may include a column for each type of data. For example, data associated with UserID1 includes name ('Bob Smith'), address (555 Park Lane), age (35), and gender (Male) of the entity. Data associated with UserID2 includes height (5'10"), weight (180), gender (Female), and medical history. Data associated with UserID3 includes financial information and an address (329 Whistle Way). Data about an entity stored in the user table 201 may generally include factual or demographic information such as, but not limited to, height, address, clothing sizes, contact information, medical information, financial information, credit card number, ethnicity, weight, and gender. Any combination of data types may be stored. The user table 201 also includes a user ID 203. The user ID may be generated by a system generating or using the electronic profile, or may be associated with or identical to a user ID already owned by the profile owning entity, such as an email account or other existing account of the entity. Each entity having an electronic profile may have a corresponding user table, such as the user table 201, stored in the electronic profile storage 140 of Figure 1.

Preferences of an entity may also be stored in the entity's electronic profile. Preferences generally refer to subjective associations between the entity and various words that may represent things, people, or groups. Each preference of an individual represents that association - "I like cats," for example, may be one preference. Preferences may be stored in any suitable manner. In the schema of Figure 2, preferences are stored by use of the user preferences table 210, the user preference terms table 220, the preference terms table 230, and the preference qualifiers table 240, which will be described further below. The four tables used to represent preference in Figure 2 is exemplary only, and preferences may be stored in other ways in other embodiments such that a profile owning entity is associated with their preferences.

Referring again to Figure 2, the user table 201 of an entity is associated with a user preferences table 210. The user preferences table 210 includes userIDs 203 of entities having profiles in the electronic profile storage 140 and lists individual preference IDs 211 associated with each userID. For example, the UserID1 is associated with SPORTS_PREFERENCE1 and SPORTS_TRAVEL_PREFERENCE1 in the example shown in Figure 2. Although shown as including only a few user IDs 203, the user preferences table 210 may generally include a list of multiple user IDs known to the profiling system and a list of individual preference IDs associated with the userIDs. In this manner, an entity's preferences may be associated with the data related to the entity. Generally, any string may be used to represent a preference ID. Also included in the user preference table 210 are qualifier IDs 212 that are used to record an association with terms contained in the preference. The qualifiers will be discussed further below.

Each preference ID has an associated entry in a user preference terms table 220. The user preference terms table 220 contains a list of term IDs associated with each user preference ID. In Figure 2, for example, the preference ID SPORTS_PREFERENCE1 is shown associated with TermID1 and TermID2. Any string may generally be used to represent the term IDs. Each TermID in turn is associated with an entry in a preference term table 230. The preference term table 230 lists the actual terms represented by the TermID. A term may generally be any string and is generally a unit of meaning, which may be one or more words, or other representation. As shown in Figure 2, the preference terms table 230 indicates the TermID1 is associated with the term Major League Baseball. Although only one term is shown associated with the TermID1, any number of terms may be so associated.

Accordingly, as described above, an entity may be associated with preferences that ultimately contain one or more terms. However, the relationship between the entity and the terms has not yet been described. An entity's preferences may include a scale of likes, dislikes, or both of the entity. Further an entity's preferences may include information about what the entity is or is not, does or does not do in certain circumstances. In the schema 200 of Figure 2, each preference may be associated with one or more qualifiers, as indicated by an association between the preference ID and a qualifier ID in the user preferences table 210. A term associated with each qualifier ID is then stored in a preference qualifiers table 240. Qualifiers describe the relationship of the preference terms to the profile owning entity. Examples of qualifiers include 'like' and 'dislike' to describe a positive or negative association with a preference, respectively. Other qualifiers may be used including 'when','when not', 'never', 'always', 'does', 'does not', 'is', and 'is not' to make more complex associations between preference words and the profile owning entity. As shown in Figure 2, the qualifier QualID1 represents the association 'like' and, QualID2 represents the association 'dislike'.

Accordingly, the structure shown in Figure 2 encodes two preferences for an entity represented by UserID1. SPORTS_PREFERENCE1 indicates UserID1 likes Major League Baseball and the Seattle Mariners. SPORTS_PREFERENCE2 indicates UserID1 likes Fenway Park. Similarly, UserID2 has SPORTS_PREFERENCE2, which indicates UserID2 dislikes Major League Baseball and the New York Yankees. UserID3 has SPORTS_PREFERENCE3, which indicates UserID3 likes Derek Jeter.

The manner of storing preferences using the tables described in Figure 2 may aid in efficient storage and analysis by allowing, for example, multiple termIDs to be associated with multiple user preference IDs without requiring storing the individual terms multiple times in the profile storage 140 of Figure 1. Instead, multiple associations may be made between the termID and multiple user preferences. However, as discussed, generally, any data structure may be used to encode an electronic profile of an entity. In some embodiments, a profile may be represented and optionally stored as a vector or index. The vector may uniquely identify an entity associated with the profile. For example, the profile vector may represent a plurality of axes, each axis representing a term, word, or user device, and the vector include bits associated with each term, word, and user device to be included in the profile.

Further information regarding an entity may be stored in an entity's electronic profile including possessions, images, social connections, permissions, recommendation preferences, location, roles, and context. Although not shown in Figure 2, these further aspects may be stored as additional star tables associated with the central user table 201. Possessions of the entity may include things the entity owns or has access to including, but not limited to, data, gaming systems, cell phones, computers, cars, clothes, bank or other accounts, subscriptions, and cable or other service providers.

Social connections of the entity may include, but are not limited to, connections to friends, family, neighbors, co-workers, organizations, membership programs, information about the entity's participation in social networks such as Facebook, Myspace, or LinkedIn, or businesses an entity is affiliated with, through real or virtual profiles.

Permissions for accessing all or a portion of the electronic profile are described further below but may include an indication of when an entity's profile attributes may be used. For example, an entity may authorize their profile attributes to be used by the profiling system responsive only to requests from certain entities, and not responsive to requests from other entities. The permissions may specify when, how, how often, or where the profiling system may access the entity's profile responsive to a request from a specific entity, or type of entity. For example, an entity may specify that sports websites may obtain information about content relevant to the entity's profile, but that banks may not. As generally described above, only the profiling system has direct access to the stored profile attributes, and the profile attributes are not generally shared with content providers that may request scoring of their content based on the entity's profile. However, the scoring may be undertaken in some embodiments when the entity has granted permission for their profile to be used to provide information to the particular content provider, or an index is offered to the provider to correlate against network content.

Recommendation preferences may include whether the entity would like or accept recommendation for additional information to be added to their electronic profile, or for data or possessions. The recommendation preferences may specify which entities may make recommendations for the electronic profile owning entity and under what conditions.

Location information of the entity may include a past, present, or future location, both physical or virtual, determined in a variety of levels of granularity such as, but not limited to, GPS coordinate, country, state, city, region, store name, church, hotel, restaurant, airport, other venue, street address, or virtual location. In some embodiments location information may be obtained by analyzing an IP address associated with an entity.

Roles of the entity may include categorizations of the entity's relationships to others or things including, but not limited to, father, mother, daughter, son, friend, worker, brother, sister, sports fan, movie fan, wholesaler, distributor, retailer, and virtual persona (such as in a gaming environment or other site).

Context of the entity may include an indication of activities or modes of operation of the entity, including what the entity is doing in the past, present, or future, such as shopping, searching, working, driving, or processes the entity is engaged in such as purchasing a vacation.

As will be described further below, all or a portion of the electronic profile may be used as an input to an analysis engine. In some embodiments, there may be insufficient data about an individual to have a meaningful output of the analysis engine based on their electronic profile. Accordingly, in some embodiments the profile of a segment sharing one or more common attributes with the individual may be used as input to the analysis engine instead of or in addition to the individual's profile. The profile of a segment may also be used to select content that may be relevant for that segment of entities, and pass content to entities that share one or more attributes with the segment.

Having described exemplary mechanisms for storing profile attributes and the content of electronic profiles, exemplary methods and systems for obtaining profile attributes will now be discussed. Profile attributes may generally be obtained from any source, including from a representative of the profile owning entity, other individuals, or from collecting data about the profile owning entity as they interact with other electronic systems. In some embodiments, referring back to Figure 1, profile attributes may be directly entered by a profile owning entity or their representative from the user device 130 using the profile management interface 135. In some embodiments, profile attributes are inferred and included in the electronic profile. That is, profile attributes can be added to an electronic profile through inference, rather than being entered by a profile owning entity or generated according to rules. As will be explained in more detail below, various information can be used as a basis from which profile attributes may be inferred.

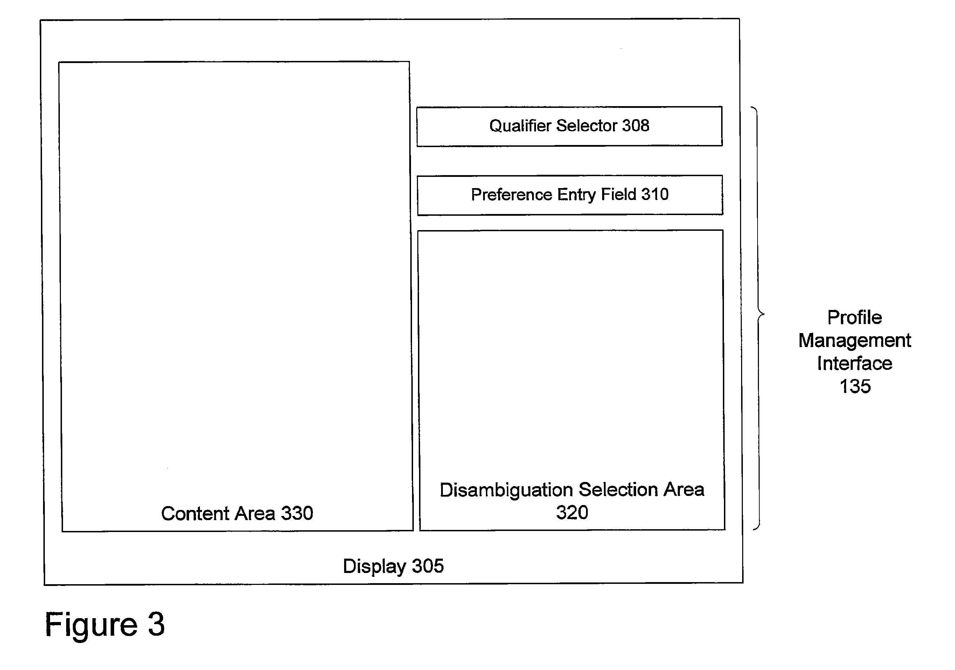

The profile management interface 135 may take any form suitable for receiving profile attributes from a profile owning entity or their representative. In one embodiment, the profile management interface 135 includes an application operating on the user device 130. The application on the user device 130 may communicate with the profiling system 110. In one embodiment, the disambiguation engine, analysis engine, or both may be implemented as an application programming interface (API), and the application operating on the user device 130 may call one or more APIs operated by the profiling system 110. In some embodiments, the application on the user device 130 that is in communication with the profiling system 110 operates in an Internet browser window, and one embodiment of the profile management interface 135 is shown in Figure 3 operating in a browser window of a display 305 of the user device. A profile owning entity, or a representative of that entity, may enter profile attributes into the preference entry field 310. Prior to entering information, the entity may have identified themselves to the profiling system by, for example, entering a username, password, or both, or other methods of authentication may be used including identification of one or more user devices and their context associated with the entity. When entering profile attributes into the preference entry field 310, the entity may also select a qualifier associated with the profile attributes using a qualifier selector 308. The qualifier selector 308, which may be unique for the entity in some embodiments, may include a drop-down menu, buttons depicting different qualifiers, or other mechanisms. For example, the qualifier selector 308 may include a button for 'Like' and one for 'Dislike' so an entity could specify that they like or dislike the terms they provide in the preference entry field 310. The entity may submit the entered profile attributes to the profile management system 115 of the profiling system 110 in Figure 1. Information may be submitted, for example, by pressing an enter key, or clicking on an enter button displayed in the browser window 302. The information may be communicated to the profile management system 115 using any suitable communication protocol, including http.

Accordingly, profile owning entities may provide profile attributes to the profile management system 115. The profile attributes may be directly captured - "I like cats" in the case of a preference, or "I am a father" in the case of a role. However, in some instances, the provided profile attributes may be ambiguous, such as "I like the giants." It may be unclear whether the profile owning entity intends to indicate a preference for the New York Giants, the San Francisco Giants, or large people.

The profile attributes submitted by an entity may accordingly be submitted to the disambiguation engine 120 of Figure 1. As will be described further below, the disambiguation engine 120 may provide a list of relevant terms that may be displayed in the disambiguation selection area 320 of Figure 3. In some embodiments, the relevant terms provided by the disambiguation engine 120 may be displayed in a graphical manner. An entity may then select the relevant terms from the disambiguation list for addition to the profile being managed. Alternatively or in addition, an entity may select or otherwise indicate, such as by right-clicking, one or more terms displayed anywhere in the browser window, or more generally displayed by the user device, that a term should be added to the entity's profile. Alternatively or in addition, embodiments of a profiling system may identify an action of the entity and automatically add a related term to the electronic profile of the entity. After processing by the analysis engine 125, which will be described further below, relevant content may be displayed in the content area 330. In some embodiments, the content area 330 may not be provided on a same screen with the profile management interface 135, and in some embodiments the content area 330 need not be on the same user device. That is, while profile attributes may be entered or revised on one device, content displayed or provided based on that profile attributes may be provided on a different device in some embodiments.

Accordingly, the disambiguation engine 120 functions to select terms, based on preference information input by an entity, that may also be relevant to the entity and may be considered for addition to the entity's electronic profile. In one embodiment, the disambiguation engine 120 may simply provide a list of all known terms containing the entity's input. For example, if the entity entered "giants," a dictionary or sports listing of all phrases or teams containing the word "giants" may be provided. While this methodology may accurately capture additional profile attributes, it may be cumbersome to implement on a larger scale.

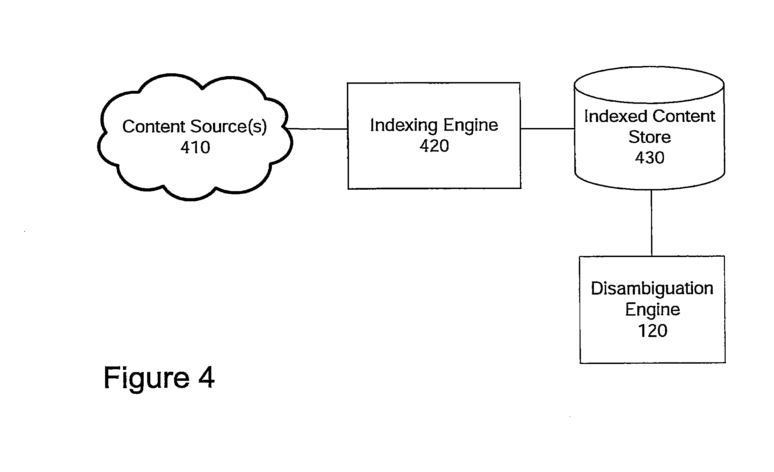

Accordingly, the disambiguation engine 120 may function along with an indexing engine 420 as shown in Figure 4. Generally, the indexing engine 420 accesses one or more content sources 410 to analyze the content stored in the accessed content sources 410 and generate an indexed content store 430. "Content" may be similarly referred to as a "document" or "documents," as will be described below, for example, for the description referencing Figures 4-6. Although shown as separate storage, the indexed content store 430 may include indexing information stored along with the content from the content sources 410, or may include only index records related to the content in the content sources 410. The index information generally includes information about the relative frequency of terms in the content from the content sources 410. In this manner, as will be described further below, terms may be identified that frequently appear along with a query term, or in a same pattern as a query table. The disambiguation engine 120 may then access the indexed content store 430 to more efficiently identify terms related to preferences expressed by an entity. The expressed preference may be stored in one storage location, or distributed across multiple storage locations.

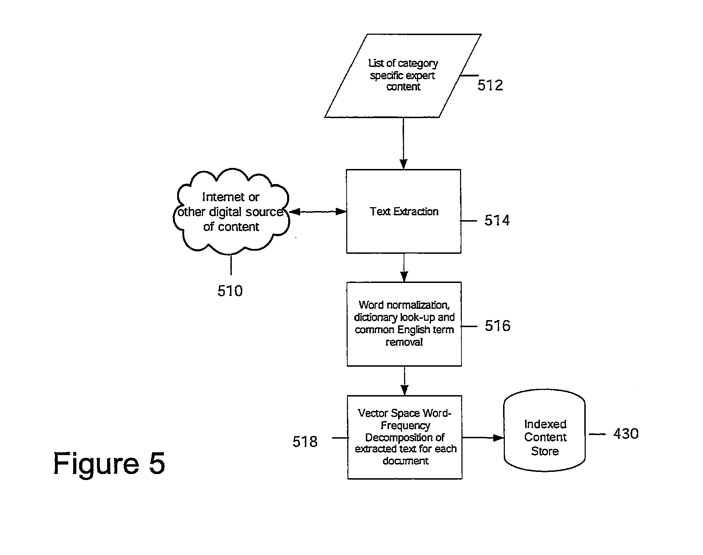

The indexing engine 420 may generally use any methodology to index documents from the content sources 410. The indexing engine 420 generally includes a processor and memory encoded with computer readable instructions causing the processor to implement one or more of the functionalities described. The processor and memory may in some embodiments be shared with those used to implement the disambiguation engine, analysis engine, or combinations thereof. In one embodiment, a vector space representation of documents from the content sources 410 may be generated by the indexing engine 420. A vector representation of each document may be generated containing elements representing each term in the group of terms represented by all documents in the content sources 410 used. The vector may include a term frequency - inverse document frequency measurement for the term. An example of a method that may be executed by the indexing engine 420 is shown in Figure 5. Figure 5 further demonstrates an example in which an indexed content store 430 may be created specific to a particular category. In some embodiments, however, the indexed content store may be generalized to one or more categories. However, in embodiments where the indexed content store 430 is specific to a single category of information, it may be advantageous to provide several content stores (which may be physically stored in the same or different media), each containing indexed content for a specific category. In this manner, the indexing performed by the indexing engine 420 will be specific to the category of information, and may in some cases enable greater relevance matching than querying a general content store.

Proceeding with reference to Figure 5, the indexing engine may receive a list of category specific expert content 512. The expert content may, for example, include a group of content in a particular category that may be considered representative of content in the category (using, for example, the Wikipedia Commons data set, or any other collection of information regarding a particular category). The indexing engine locates the category specific content in the list over the Internet or other digital source of category-specific content 510. The source of category specific content 510 may be located in a single storage medium, or distributed among several storage mediums accessible to the indexing engine over the Internet or other communication mechanisms.

The indexing engine extracts the text 514 from the expert content and may perform a variety of filtering procedures such as word normalization, dictionary look-up and common English term removal 516. During word normalization, tenses or variations of the same word are grouped together. During dictionary look-up, meanings of words can be extracted. During common English term removal, common words such as 'and' or 'the' may be removed and not further processed. Grammar, sentence structure, paragraph structure, and punctuation may also be discarded. The indexing engine may then perform vector space word-frequency decomposition 518 of the extracted text from each document. The use of the term document herein is not meant to limit the processing of actual text documents. Rather, the term document refers to each content unit accessed by the indexing engine, such as a computer file, and may have generally any length.

During the decomposition, each document may be rated based on the term frequency (TF) of the document. The term frequency describes the proportion of terms in the document that are unique. The term frequency may be calculated by the number of times the term appears in the document divided by the number of unique terms in the document. A vector of term frequencies may be generated by the indexing engine to describe each document, the vector having elements representing a term frequency for each term contained in the entire content store analyzed.

The vector representing each document may also contain an inverse document frequency (IDF) measure, that reflects how often the term is used across all documents in the content store, and therefore a measure of how distinctive the term may be to specific documents. The IDF may be calculated as the log of the number of documents containing the term divided by the number of documents in the content store.

Accordingly, a term frequency-inverse document frequency ("TF-IDF") score for a term and a document within may be determined by multiplying the term frequency value for the term in the document and the inverse document frequency score for the term in the content store. In this manner, terms having a high TF-IDF score may be more representative of the document, content store, or both, than those having a low TF-IDF score (which may be ubiquitous terms throughout the content store such as the term 'the' or 'and').

In some embodiments, a Kullback-Leibler Divergence, $D_{KL}$ may also be included in a vector representation of a document. $D_{KL}$ may provide a measure of how close a document is to a query - generally, how much common information there is between the query and the document. $D_{KL}$ is a measure of a distance between two different probability distributions - one representing the distribution of query terms, and the other representing the distribution of terms in the document. $D_{KL}$ may be calculated as:

$$D_{KL}(p \| q) = \sum_i p_i \log\left(\frac{p_i}{q_i}\right)$$

where p is the distribution of terms in the document, q is the distribution of query terms, and i represents each term. The distribution of terms in the document may be a vector with entries for each term in a content store, where the entries are weighted according to the frequency of each term in the document. The distribution of query terms may be a vector with entries for each term in a content store, where the entries are weighted according to the frequency of each term in the query.

Accordingly, using TF-IDF, Kullback-Leibler Divergence, other methods of document relevance measurements, or combinations thereof, the indexed content store 430 of Figure 5 contains one or more content indexes representing a measure of the importance of various terms to each analyzed document.

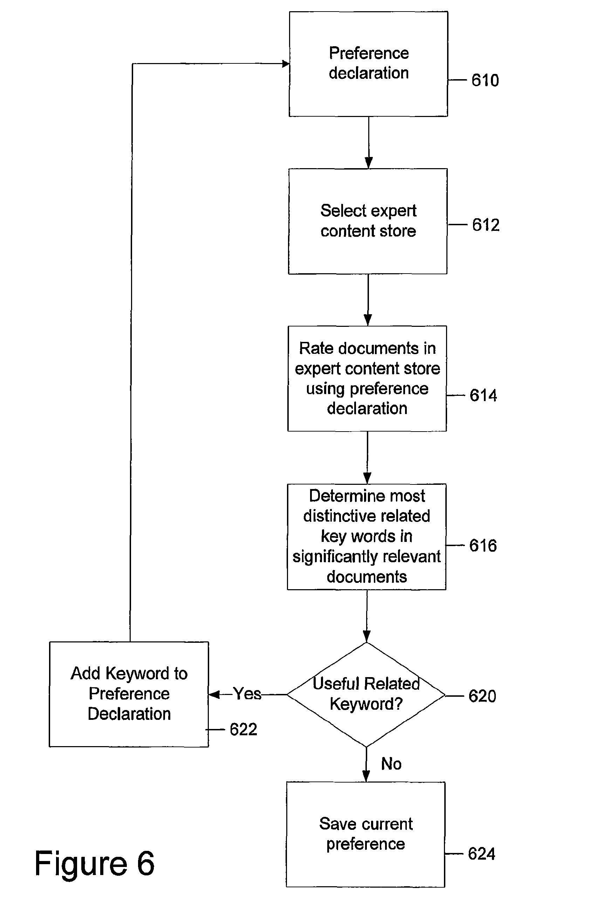

Having described the indexing of documents, a process for disambiguating a preference by the disambiguation engine 120 using the indexed content store 430 is illustrated in Figure 6. An entity declares 610 a preference, for example by entry into the preference entry field 310 of Figure 3. The disambiguation engine 120 then selects an expert content store 612 to query using the declared preference. The selection may be made in a variety of ways. In some embodiments, a single content store is used and no selection need be made. In other embodiments, the disambiguation engine 120 receives contextual information about the entity entering preference information, and the contextual information is used to select the expert content store. For example, in one embodiment, the disambiguation engine receives information that the entity entering profile attributes are doing so from a sports-related website, and accordingly, an expert sports content store may be selected.

Documents in the expert content store are rated 614, as described above, based on their relevance to individual terms. In some embodiments, the rating is conducted once the preference is entered, while in others, the already stored vectors containing the measurements are accessed. A set of most relevant documents to the expressed preference may be identified. The most relevant documents may be identified by calculating a relevance number for each document based on the preference terms. A relevance number represents the relevancy of each document to the preference, using the entered preference terms. Embodiments of the relevance number use a 0-100 scale, and may accommodate a multi-term preference. In other embodiments, other scales or ranges may be used for the relevance number including 0-10, or negative numbers may be used. Negative relative numbers may be used in some embodiments to express scores relative to profile aspects an entity has provided a negative grammar for, such as 'dislike' or 'not'. The relevance number for a single term may generally be calculated as a normalized TF.IDF value. In one embodiment, the calculation may be made by subtracting a minimum TF.IDF value for all terms in the indexed content store from the TF.IDF value of the term and dividing the result by the difference between the maximum TF.IDF value for all terms in the indexed content store in the minimum TF.IDF value for all terms in the indexed content store. For multiple terms in a preference, the relevance number of each document may be given as:

$$RelevanceNumber = \frac{1}{NTerms} \sum_{i=1}^{NTerms} \frac{TF.IDF_i - \min(TF.IDF)}{\left(\max(TF.IDF) - \min(TF.IDF)\right)}$$

NTerms is the number of terms in the query. The relevance number accordingly is a sum of the relevance numbers for each term in the query, divided by the number of terms. In this manner, the relevance number represents a normalization of term-by-term relevance scores for individual terms. In this manner, the relevance number is based in part on the TF-IDF value for that term, but may be normalized with the maximum and minimum TF-IDF values for that term across all documents in a content store or other set. The relevance number calculated as above is accordingly a number between 0 and 100. The Kullback-Leibler Divergence, $D_{KL}$, may also be used as a relevance number to score content items from a content store, or across multiple content stores. In the case of $D_{KL}$, a lower $D_{KL}$ number indicates a more relevant content item (as it may indicate the information space between the item and the preference is small).

While in some embodiments, the calculation of relevance numbers may not change over time as the profiling system operates, in some embodiments relevance numbers or the method for calculating relevance numbers, may be modified in a variety of ways as the profiling system operates. The relevance numbers may be modified through entity feedback or other learning methodologies including neural networks. For example, relevance numbers as calculated above may be used to develop a set of neural network weights that may be used to initialize a neural network that may refine and learn techniques for generating or modifying relevance values. The neural network may be trained on a set of training cases, that may be developed in any of a variety of ways, including by using entity selection of a document to set a target value of a resultant relevance number. During training, or during operation of the profiling system, error functions may be generated between a desired outcome (such as a training case where an entity or administrator specifies the relevance score, or a situation in operation where entity feedback indicates a particular relevance score) and a calculated relevance number. The error function may be used to modify the neural network or other system or method used to calculate the relevance number. In this manner, the computation of relevance numbers, and in some embodiments, the relevance numbers themselves, may change as the profiling system interacts with content items and entities. For example, a relevance value for a content item may be increased if entity feedback indicates the content item is of greater or lesser relevance. The entity feedback may be explicit, such as indicating a degree of relevance the entity would assign to the content item, or implicit, such as by identifying multiple entities have selected the content item or responded to the content item to a degree that indicates the relevance number should be higher, or lower, than that assigned by the profiling system. Entity feedback may also include feedback obtained by monitoring the activity, selections, or both of one or more entities without necessarily receiving intentional feedback from the entity. Examples of neural networks, entity feedback modification, and other computer learning techniques usable with embodiments of the present invention are described in co-pending U.S. Application No. 12/392,933, filed on February 25, 2009, which application is hereby incorporated by reference in its entirety for any purpose.

Referring back to Figure 6, the set of significantly relevant documents may be identified by setting a threshold relevance number, or by setting a fixed number of results, and selecting that number of results in relevance number order, regardless of the absolute value of the relevance number. In some embodiments, the most relevant documents are selected by identifying a place in a relevance-ranked list of documents where a significant change in relevance score occurs between consecutive results. So, if, for example, there are documents with relevance numbers of 90, 89, 87, 85, 82, 80, 60, 59, 58... then a threshold relevance number of 80 may be selected because it occurs prior to the relatively larger twenty-point relevance drop to the next document.

After the most relevant documents have been selected, the disambiguation engine may determine the most distinctive related key words 616 in those documents. The most relevant keywords may be determined by weighting the highest TF.IDF terms in the documents by the relevance number of the document in which they appear, and taking a sum of that product over all the documents for each term. The terms having results over a threshold, or a fixed number of highest resulting terms, may be selected by the disambiguation engine as most distinctive related keywords 616. These selected keywords may be presented to the entity to determine if the keyword is useful 620. For example, the keywords may be listed in the disambiguation selection area 320 of Figure 3. The preference entering entity may find that one or more of the identified keywords helps to refme the preference they have entered, or for other reasons should be included in their electronic profile, and may indicate the keyword should be added 622 to their preference. The disambiguation engine may further continue the disambiguation operation by repeating the process shown in Figure 6 using the added preference terms. If keywords are not identified as belonging to an entity's preference, the declared preference is stored 624.

Examples of systems and methods for identifying relevant terms and indexing that may be used to implement disambiguation and indexing engines in accordance with embodiments of the present invention are described in co-pending U.S. Application No. 12/392,933, filed on February 25, 2009, which application is hereby incorporated by reference in its entirety for any purpose.

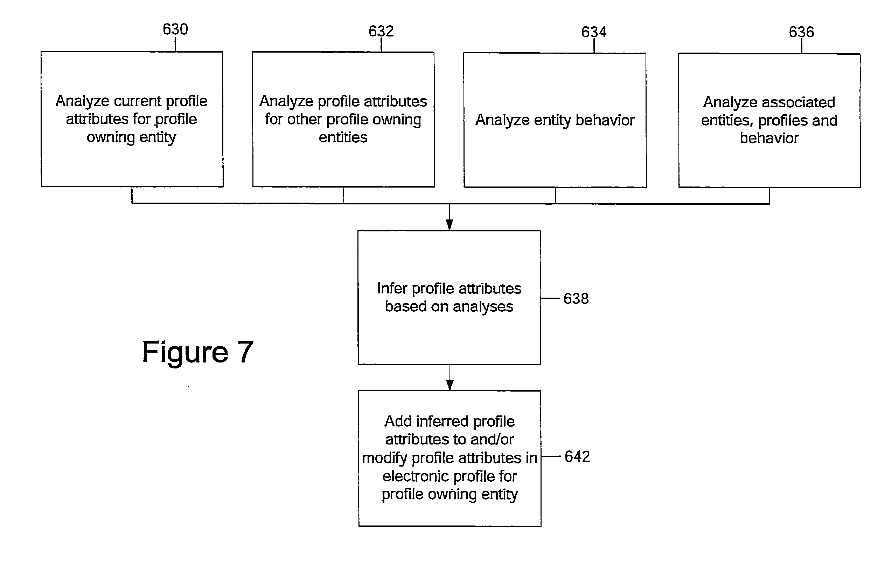

As previously mentioned, profile attributes, including preferences, can be inferred and included in the electronic profile for an entity. Various information and behavior can be used for inferring profile attributes. For example, profile attributes can be inferred from other profile attributes of an entity's electronic profile. Profile attributes may be inferred using electronic profiles, or particular preferences included in the electronic profiles, for other similar or related entities. Other information can be used as well. Figure 7 illustrates a flow chart for inferring profile attributes according to an embodiment of the present invention. A profile owning entity has a profile stored, for example, in an electronic profile storage 140 (Figure 1). The profile management system 115 analyzes 630 profile attributes of the profile owning entity's current profile, analyzes 632 profile attributes for other profile entities, analyzes profile owning entity behavior 634, and analyzes 636 associated entities, profile attributes and behavior. Although shown in Figure 7 as analyzing the four types of information, embodiments of the invention include those where one or combinations of the four types are analyzed, as well as including those where other types of information not specifically shown are analyzed. The profile management system 115 infers 638 likely additional attributes of the profile based on the analyses and adds the inferred profile attributes to and/or modifies profile attributes 642 in the electronic profile for the profile owning entity.

Accordingly, examples of the entry of profile attributes and refinement of entered profile attributes have been described above that may facilitate the creation and storage of electronic profiles.

Referring back to Figure 1, the information contained in an entity's electronic profile may be used by the analysis engine 125 to take a predictive or deterministic action. In some embodiments, the analysis engine uses the entity's electronic profile in combination with search criteria provided by the entity through the user device 130. The search criteria can be entered by way of text, selection of preset search criteria, or a combination of both. A variety of predictive or deterministic actions may be taken by the analysis engine 125 based in part on information contained in an entity's electronic profile. Products, things, locations, or services may be selected and suggested, described, or presented to an entity based on information contained in the entity's electronic profile. In other embodiments, other entities may be notified of a possible connection to or interest in an entity based on their electronic profile. Content on a website browsed by an entity may be modified in accordance with their profile in some embodiments. The content modification may include the ordering or ranking of content in the display, highlighting of content, shaping of content, or combinations thereof. The profiling system 110 may also generate or assist in the provider device generating a notification, alert, email, message, or other correspondence for the entity based on its profile. Accordingly, the analysis engine may take action for the entity or for third parties based on the entity's profile attribute.

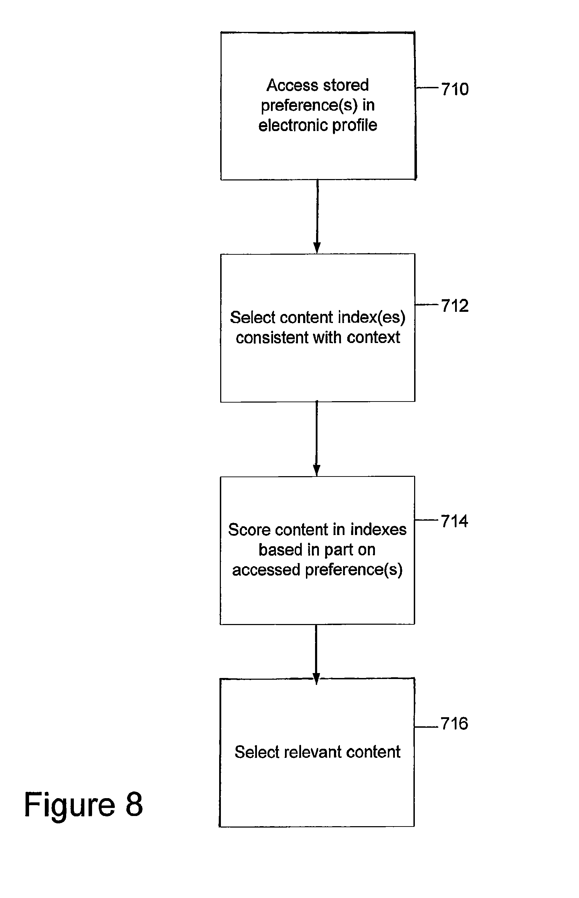

In one embodiment, which will be described further below, the analysis engine 125 selects content for presentation to the entity based on their electronic profile and search information entered by an entity. An example of operation of the analysis engine 125 to select relevant content for an entity is shown in Figure 8. The analysis engine 125 receives the entity's search information and accesses 710 one or more aspects, such as a preference, in an entity's electronic profile. In some embodiments, a single stored preference is accessed, in some embodiments selected preferences may be accessed, and in some embodiments all stored preferences may be accessed. In some embodiments, other aspects of the profile may be accessed instead of or in addition to one or more preferences. The analysis engine 125 may access an entity's electronic profile responsive to a request from the entity or a third party, such as the provider device 145 in Figure 1, to provide relevant information for the entity. The selection of which preferences associated with an entity to access may in some embodiments be made according to the context of the request for analysis. For example, if the request comes from a sports content provider, one or more sports-related preferences may be accessed. In other embodiments, multiple preferences may be accessed and the context of the request or of the entity may alter the manner in which the relevance number is computed. For example, in some embodiments a total relevance number is calculated by summing individual relevance numbers calculated using a respective preference. A weighted sum may also be taken, with the weight accorded to each individual relevance number based on the preference with which it is associated. Accordingly, an entity's context, which may be stored in the entity's electronic profile, may determine the weighting of individual preferences in calculating a relevance number.

In addition to selecting relevant content for a user based on their electronic profile, in some embodiments the analysis engine 125 may alternatively or in addition select entities having profiles, or portions of profiles, most relevant to a particular set of content. For example, referring back to Figure 1, the provider device 145 may communicate an indication of selected content, or all content, from the content storage 155. The analysis engine 125 may then score one or more electronic profiles 140 (or aspects of those profiles) based on the content, as generally outlined above. The analysis engine 125 may then report to the provider device 145 a selection of entity profiles that may be relevant to the content provided by the provider device, or report back an aspect of profiles that are relevant. For example, the analysis engine may indicate particular entities that are relevant to the content, or an aspect of those entities - such as reporting that entities who like horses or sports appear to be relevant to the content provided by the provider device 145. This may aid the provider in targeting their content more effectively or preparing mailings or other communications to users. As above, in some embodiments, electronic profiles are only utilized when the profile specifies it may be used to conduct analysis for the provider. Examples of scoring entity profiles and finding entities based on selected content are described in more detail below.

In other embodiments, a specific request may not be required to begin the process shown in Figure 8. The analysis engine 125 may select 712 one or more content indices for analysis based on a context in which the analysis 125 is operating. In some embodiments, the content index or indices to use may already be known, or there may only be one, in which case the selection 712 may not be necessary. In other embodiments, the context surrounding the request for analysis may allow the analysis engine 125 to select one or more content indices for analysis. For example, if the provider device 145 of Figure 1 is a sports online service provider, the analysis engine 125 may select a sports related content index. Or if the provider, such as the provider device 145, requests analysis of a specific content store, such as the content in storage 155 of Figure 1, the analysis engine may select an index associated with the content in storage 155.

Referring back to Figure 8, the analysis engine scores 714 content in the selected indices based on the accessed preferences. The scoring process may occur in any manner, including a manner that allows the analysis engine to evaluate content items based on terms in the stored preference. In one embodiment, the scoring process includes assigning a relevance number to content items based on the preference as described above with reference to Figure 6 and the document rating 614 performed during preference disambiguation. However, in this case, the content items are simply scored and further analysis of relevant terms within the document may not be done, as was done during preference disambiguation. Examples and techniques for content scoring usable with embodiments of the present application are described in co-pending U.S. Application No. 12/392,933, filed on February 25; 2009, which application is hereby incorporated by reference in its entirety for any purpose.

Accordingly, content items in the selected indices may be scored by calculating a relevance number using the term(s) in the accessed electronic profile preference. Relevant content may then be selected 716 in a similar manner to the selection of documents and terms for the disambiguation of preferences described above. That is, content may be selected having a relevance number over a threshold, or a fixed number of highest rated content items may be selected, or all content items preceding a sharp decline in relevance number may be selected. The selected content items, their ratings, or both may then be transmitted to the provider device 145 of Figure 1 or, in some embodiments, directly to the user device 130. The selected content items may be displayed in the content area 330 of the user device display shown in Figure 3. The provider device, user device, or both, may handle received content in accordance with its relevance number and may, for example, display the content differently or at a different time based on its relevance. In some embodiments, accordingly, the relevance number need not be used to select content, but may be used to change the way one or more content items are handled by the user device or provider device.

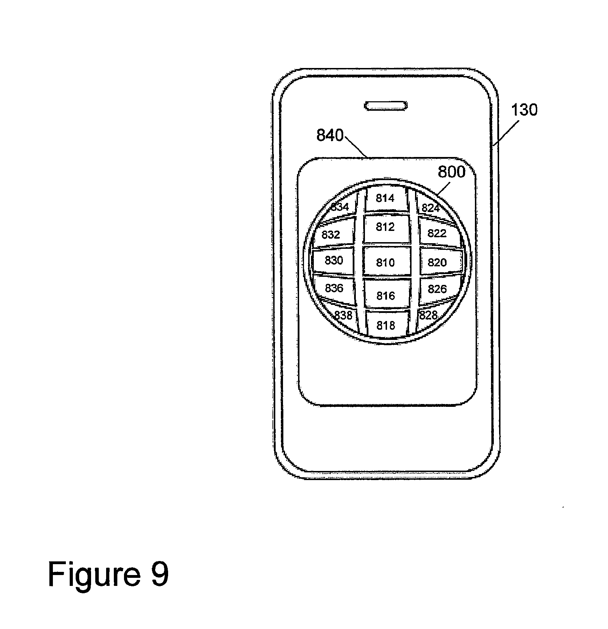

Selected content items may be displayed using other interfaces, and may be arranged according to their relevance number. For example, content items identified by the analysis engine may be displayed to the entity in order of increasing or decreasing relevance. An embodiment of a user interface 800 to display relevant content to a user is shown in Figure 9. The user interface 800 is displayed on a touch screen display 840 of the user device 130, shown in Figure 9 implemented as a handheld device. The user interface 800 displays a plurality of content items 810-838. Each item may include a picture, text, a link to further content represented by the picture or text, or combinations thereof. The content items are positioned within the user interface 800 according to their relevance to the entity's profile. The user interface contains content items positioned to appear as though they were laid on a surface of a sphere, although the display 840 may be flat. In one embodiment, the content items are arranged such that they are placed a distance from a center of the user interface 800 that corresponds to their relevance number. That is, content items may have decreasing relevance according to their angular distance from a center of the user interface 800.

Accordingly, the center content item 810 may be a content item having a highest identified relevance number, while content items 820, 816, 830, and 812 have next highest relevance numbers, content items 836, 826, 822, and 832 have the next highest relevance numbers, and content items 834, 824, 828, and 838 have the next highest. The user interface 800 may be interactive, such that a user may select a line of content items either in longitude or latitude by, for example, touching the line. Once selected, the user may scroll across latitude or longitude. Further relevant content (not shown in Figure 9) may accordingly be rotated into view.

The user interface 800 may also be used to disambiguate profile attributes, as generally described above. A user entered preference term may appear as the item 810. Related keywords identified by the disambiguation engine 120 according to an embodiment of the process shown in Figure 6 may be displayed in the locations shown by items 812-838, again generally placed at an angular distance determined by their relevance to the item 810. In some embodiments, successive bands of displayed content or disambiguation terms refine the relevance in different ways. For example, in one embodiment, the item 810 corresponds to an entity expressed preference term. Related keywords identified according to the term 810 may be placed in the latitude band of 810, such as 820, 830, and others which may not be shown. The next latitude band including items 832, 812, and 822, may be generated by identifying relevant keywords using two terms. For example, a relevant keyword may be displayed as item 832 using both the term at item 810 and at item 830 to query a content store.

Similarly or in addition, different latitude or longitude bands may correspond to different categories of information. For example, if an entity expressed preference term is 'baseball', baseball may be shown at item 810. Different names of baseball players may accordingly be displayed at items 812, 814, 816, and 818 while different names of baseball teams may be displayed at items 822, 824, 826, and 828. As described above, the term shown at item 822 may be determined by relevance to multiple terms including the term at positions 810 and 812. Accordingly, if the player "Alex Rodriguez" appears at item 812, the team that player plays for (the Yankees) may appear at item 822. As described above, a user may then select any latitude or longitude band and rotate it to bring additional options into the display area. If the entity viewing the user interface 800 determines any of the displayed preference disambiguation terms to be relevant to their preference, they may so indicate, by for example, touching or tapping the relevant item, and it may be added to the entity's preference as described above with reference to Figure 6. In other embodiments, the user interface 800 may include items displayed as though arranged on a plurality of nested spheres. The different spheres may contain different categories of relevant keywords. So, for example, the names of baseball players may be displayed at all item positions shown in Figure 9 while another sphere - larger or smaller in radius than the illustrated sphere - displays the names of baseball teams.

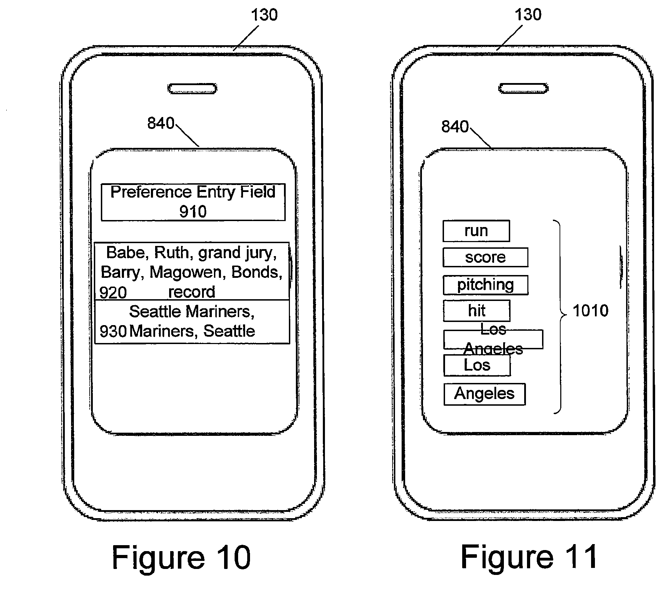

Another embodiment of a user profile management interface is shown in Figures 10 and 11. Again, the embodiment is shown implemented on the user device 130, shown as a hand held device having the touch screen display 840. In a first view, the user device 130 displays a preference entry field 910 and may also display terms associated with two stored preferences 920 and 930. The stored preference 920 includes terms Babe, ruth, grand jury, barry, magowan, bonds, and record. The stored preference 930 includes terms Seattle Mariners, Seattle, and Mariners. An entity may enter terms for a new preference by entering terms into the preference entry field 910. As an example, an entity may enter the term 'Dodgers' into the preference entry field 910. A clarification view may then be displayed by the user device 130, as shown in Figure 11. The clarification view includes terms 1010 identified by the disambiguation engine as possibly being relevant to the expressed term. Accordingly, the terms run, score, pitching, hit, Los Angeles, los, and angeles, are displayed by the user device 130 in Figure 11. An entity may select any of these terms as relating to their profile, and transmit them to the profiling system for inclusion in the entity's profile. For example, the entity may select Los Angeles and pitching. A stored profile may then be created containing the terms Dodgers, Los Angeles, and pitching. In other embodiments, following the selection, additional terms may be displayed by the user device 130 that are determined by the disambiguation engine to be relevant on the basis of all terms entered thusfar.

Examples of scoring content based on user preferences and identifying related relevant keywords have been described above in both an example of disambiguating profile attributes and scoring content for selection. The calculation of a relevance number based on preference terms was described.

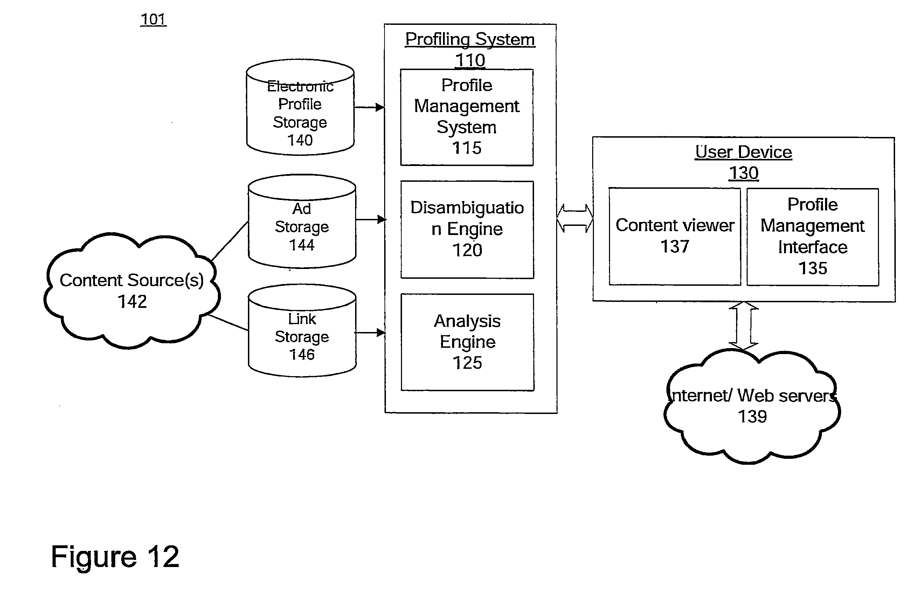

Embodiments of the invention may provide a system for selecting advertisements or other content for an entity accessing network accessible content. A suitable system 101 is shown in Figure 12. The selections are made by the system based on an electronic profile of the entity and the content accessed by the entity, such as, but not limited to, a web page, web site, email, messaging, message item, document, or image. A browser plug-in may render the selected advertisement, content, or both in a separate window or a portion of the browser window. In this manner, the selected content, advertisements, or both may remain as the entity browses to other sites or accesses other content. Although the same area may be used to display content and advertisements, the selected advertisements and content may change as the entity navigates to different websites or accesses different network accessible content. Accordingly, in embodiments of the present invention, the profiling system 110 may receive information about the web browsing activities of an entity, and enables the transmission of selected content to the entity, where the selected content is chosen based in part on an electronic profile associated with the entity and the information about the entity's web browsing activities.

Electronic profiles for use with the system 101 in Figure 12 have generally been described above. The analysis engine uses information from the electronic profile to select links to content, advertisements, or both, for the entity. The profiling system 110 includes a profile management system 115, a disambiguation engine 120, and an analysis engine 125, as have generally been described above. In embodiments of the present invention, the profiling system 110 receives information about the web browsing activities of an entity, and enables the transmission of selected content to the entity, where the selected content is chosen based in part on an electronic profile associated with the entity and the information about the entity's web browsing activities.

The content viewer 137 may be implemented as an Internet browser plug-in or as a stand-alone application used to view content selected based on information regarding an entity's browsing activity, network accessing activity, or both, and their electronic profile, or the content viewer 137 may be embedded in a different application. The user device 130 may accordingly be, but is not limited to, a personal computer, kiosk, cell phone, personal digital assistant, television set-top box, television, GPS system, projector, display, or music player. User devices, profiles, and aspects of the profiling system 110 have been described above.

In embodiments of the present invention, the profiling system 110 may receive further information from the user device 130, such as a name or all or a portion of the content of a web page browsed by the entity operating the user device 130. This information may also be stored in the electronic profile storage 140 or other storage, although it may only be temporarily stored, or may not be stored at all in some embodiments.

The user device 130 further operates an Internet browser and a content viewer 137, which may be a browser plug-in. In some embodiments the browser plug-in runs on the same user device 130 as the profile management interface 135, however in some embodiments the content viewer 137 operates on a user device having no profile management interface 135. That is, an entity need not enter or refine profile information using the same device on which they will view advertisements and links selected based on their stored profile information.

The user device 130 may be connected to a web server 139 or other sources of information over the Internet and an entity may use the user device 130 to browse the web using any Internet browser or other software.

Content sources 142 represent any source of content, including advertisements that may be images, text, video, or combinations thereof. Advertisements may be provided by any number of businesses or advertisers. The analysis engine 125, indexing engine, or combinations of engines, may analyze the content from the content sources 142 and store advertisements in the ad storage 144 and links to content in the link storage 146. In some embodiments, content sources 142, ad storage 144, link storage 146, or combinations thereof may include a set of content sources, advertisements, links, or combinations thereof that are designated as sponsored content sources, advertisements, or links. The sponsored content sources, advertisements, and links may be analyzed separately or differently from other content sources, advertisements, and links, and in some embodiments may be physically stored separately. Although shown as separate storage devices, in some embodiments the advertisements and content links may be stored on a same storage medium, and may be distributed across any number of physical storage locations. Further, in some embodiments the advertisements, links, or both may be stored on the same physical storage device as some or all of the electronic profiles in the electronic profile storage 140. As will be described further below, the advertisements and links may be stored along with an index indicating the relative frequency of terms in or associated with the advertisements and links. Although advertisements and links have been described other content, rich media, or other application functionalities may be stored an accessed by the profiling system 110.

The analysis engine 125 may score advertisements, links, rich media, other application functionality, or combinations thereof based on one or more of the electronic profiles stored in electronic profile storage 140. The score may additionally be influenced by a website accessed by the user device 130. The output of this process may be provided to the content viewer 137 such that a number of relevant links, advertisements, or both are displayed in a browser window displayed on the user device 130. There may be a fixed number of respective links and advertisements displayed, or all links or advertisements having a score above a certain threshold may be displayed in some embodiments.

Accordingly, an entity may communicate profile information to the profiling system 110 through the profile management interface 135 in communication with the profile management system 115. The profile management system 115 and the disambiguation engine 120 may refine and expand the profile information provided. An electronic profile of the entity is stored in electronic profile storage 140. While a single electronic profile storage 140 location is shown in Figure 1, the electronic profile may in some embodiments be distributed across a plurality of storage locations, including across a plurality of storage locations associated with different physical electronic devices that may be used by an entity. Accordingly, in some embodiments, only a portion of the entity's profile may be located on the electronic profile storage 140. As the entity browses the web or other network available content (either on the user device 130 or another device), using a browser equipped with the content viewer 137, the content viewer 137 requests advertisements, links, or both from the analysis engine 125. The content viewer 137 may also transmit information about the network accessible content accessed to the profiling system 110 for use by the analysis engine 125. In embodiments where the network accessible content accessed includes a web page or web site, information about the webpage or site accessed may include but is not limited to URL, metadata, time and date visited, content of the website viewed, and website host. In embodiments where the network accessible content accessed is not a web page, the information transmitted may include metadata associated with the accessed content, terms or other features of the content, a location of the content, a file type, and one or more protocols associated with the content, or combinations thereof.

The analysis engine 125 accesses the entity's electronic profile stored in electronic profile storage 140 and, provided the entity has chosen to allow all or a portion of its profile information to be used responsive to a request from the content viewer 137, scores the ad storage 144, link storage 146, or both in accordance with the accessed electronic profile, information received about the website or page visited, or both. The resultant scores are used to select advertisement, links or both for display by the content viewer 137 in a browser on the user device 130 along with the website content requested.

A profile associated with an entity may additionally store appearance settings for the content viewer 137, which may include electronic wallpaper information, skinning, or branding information, or combinations thereof. The appearance settings may be used to render selected content for an entity in a window having the wallpaper, skin, or other appearance indicated by the appearance settings in an entity's electronic profile.

An example of operation of the analysis engine 125 to select relevant advertisements, links, or both, will be described with reference to Figure 8. The analysis engine 125 receives information 711 about a network accessible content item, such as but not limited to, a website, web page, email, messaging, message item, document, or image, accessed by an entity, or simply receives a request for information from a browser plug-in being operated by the entity or on its behalf. The analysis engine 125 accesses 710 a stored preference in an entity's electronic profile, as generally described above. Context may be used to change the weighting for relevance calculations or the preference attributes used to score content, for example, the analysis engine 125 may utilize the ad and link storage 144 and 146 shown in Figure 12 to provide context.

Referring back to Figure 7, the analysis engine scores 714 content in the selected indices based on the accessed preferences and received information about the network accessible content item(s), such as website(s) or web pages, accessed. The scoring process may occur in any manner, as generally described above. Relevant advertisements and content links may then be selected 716 in a similar manner to the selection of documents and terms for the disambiguation of preferences described above. That is, content may be selected having a relevance number over a threshold, or a fixed number of highest rated content items may be selected, or all content items preceding a sharp decline in relevance number may be selected. The selected links, advertisements, or both may then be displayed in the content area 330 of the user device display shown in Figure 3.

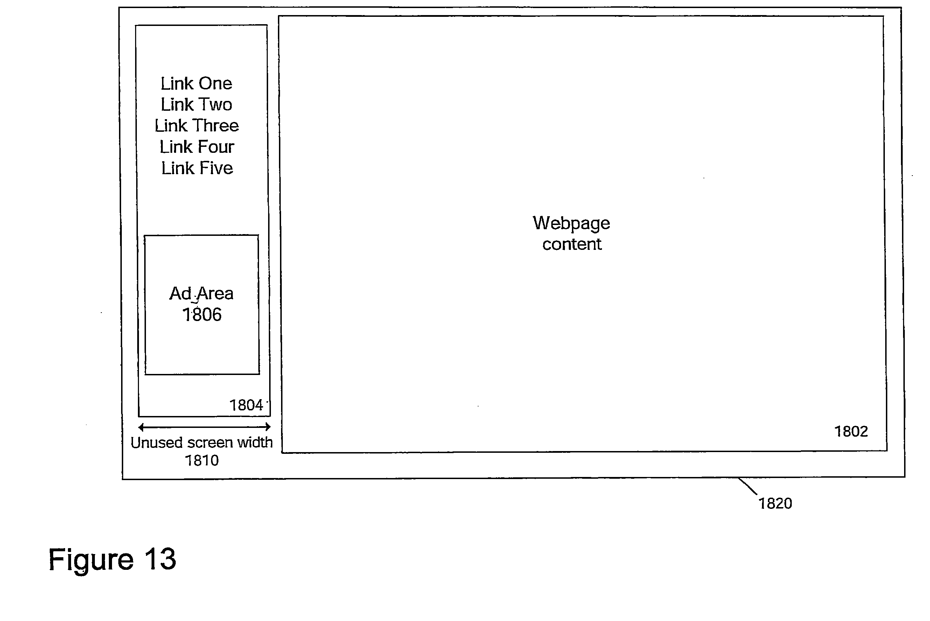

Having described an overview of selecting relevant advertisements and links to relevant content using electronic profile information associated with an entity as well as information about one or more network accessible content items, such as websites or web pages, visited by the entity, an example of how the content viewer 137 may display those relevant advertisement(s), link(s), or both will now be described with reference to Figure 13. Of course, the relevant content may be displayed differently in other embodiments.

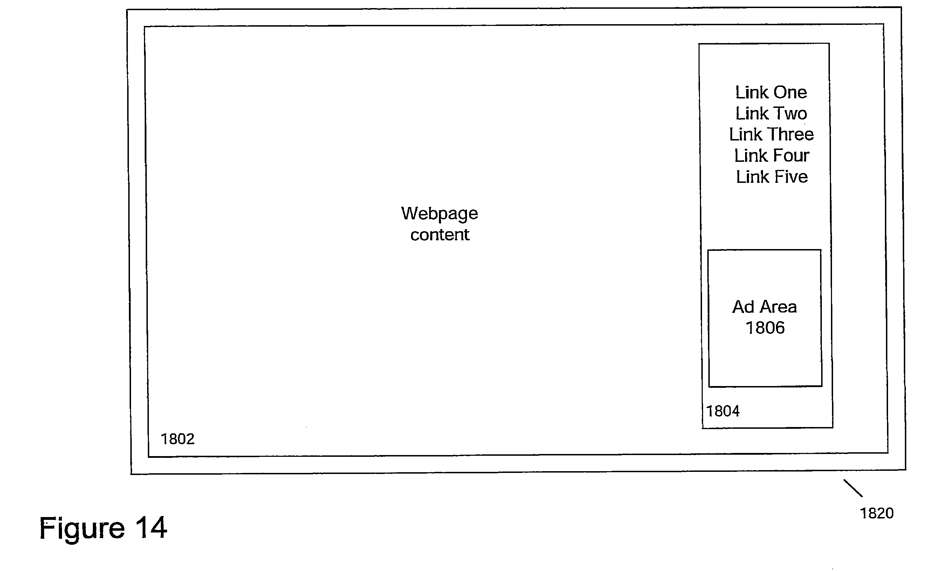

A browser window 1820 is shown in Figure 13. The browser window may be generated by any Internet browser program including but not limited to Internet Explorer, Mozilla, Safari, and Firefox. Additionally, the Internet browser program may be operating on any type of user device as generally described above. The browser window 1820 generally displays website content 1802 of websites visited by an entity. As is generally understood, as the entity browses the web, and follows links or enters URLs, different website content will be displayed in the area 1802. The content viewer 137 described above with reference to Figures 1 and 12 may render a relevant content area 1804. The relevant content area 1804 may overlay portions of the website content 1802, and may generally be positioned by a viewer to a suitable location in the browser window 1820, and may be pinned down as known in the art in any desired location. However, in one embodiment, as shown in Figure 13, the relevant content area 1804 makes use of unused screen width 1810 that may be present when a widescreen monitor is used. Large or widescreen displays, such as displays wider than about 1024 pixels, although in some embodiments larger than 800x600 pixels, and in some embodiments wider than 1000 pixels, may have unused screen width 1810 when rendering a typical website. In the process of installing a viewer, such as the content viewer 137, the application may assess a screen resolution of the user device 130 and make a determination regarding where on the screen to position the viewer. The application may recommend that the entity utilize a different monitor if the experience would be non-optimal. The typical website may be designed to appear on a screen having a different aspect ratio or width, and the unused space 1810 may be present when a screen of a widescreen aspect ratio is used. In some embodiments, the content viewer 137 is configured to render the links, advertisements, or both, selected by the analysis engine 125 in the unused space 1810. In this manner, the items displayed in the relevant content area 1804 may not affect the display of webpage content 1802. In other embodiments, the content viewer 137 may render the relevant content area 1804 within the website content area 1802, as shown in Figure 14. In some embodiments, an entity viewing the relevant content area 1804 may select the position of the area 1804 in the display of the user device by dragging the area 1804 around and clicking to place it in a fixed location.

The content viewer 137 may also facilitate reporting to advertisers or other content providers, provided an entity has configured their electronic profile such that it may be used to provide such information. The profiling system 110 may track a number of advertisement impressions delivered over a specified time period, and the content viewer 137 may report click-throughs on advertisements or content links to the profiling system 110. In this manner, the profiling system can report ad impressions and click through rates. The profiling system 110 may also aggregate consumer profile data based on the electronic profiles of entities that have viewed the advertisements, clicked on the advertisements, or both. In some embodiments, the profiling system 110 aggregates data only when an entity's electronic profile indicates it may be so used. Reporting of click through or other data may be performed using standards employed by the Internet Advertising Bureau or other organizations. Click throughs may be reported related to advertisements, content, or both. Further, reporting may include information regarding what other advertisements, content, or both were displayed to the entity. Still further, in some embodiments, reporting can include information provided to the profiling system 110 to make the selection of the advertisements and links provided to the entity.

The relevant content area 1804 may include the relevant links, advertisements, rich media, applications, or combinations thereof, supplied by the analysis engine 125. In the embodiment of Figure 13, five links and one advertisement are provided. The links are displayed above the advertisement in Figure 13, although other configurations are possible. As the viewer browses the web and visits different web pages, the content displayed in the website content area 1802 may change. As the new website information is transmitted to the analysis engine 125, the links and ads displayed in the relevant content area 1804 may also change. Although shown in Figure 13 as a web browser window, the relevant content area 1804 may in other applications be a separate application or process and, instead of or in addition to displaying selections based on a web page or site viewed, display selections based on other network accessible content accessed by an entity, such as but not limited to documents, imagery, and correspondence such as emails. A viewer may click on the links or ads in the relevant content area 1804, causing further information related to the selection to appear in the webpage content area 1802. In some embodiments, an entity may add information to their electronic profile by selecting terms appearing in the webpage content area 1802 or the relevant content area 1804 and right-clicking or otherwise indicating that the selected term should be transmitted to the profiling system 110 for inclusion in the entity's electronic profile.

In this manner, an entity operating a user device may completely control information displayed in an application window. The content displayed is based on the entity's profile and network accessible content accessed by the entity. In this manner, advertisements, content, rich media, applications, and combinations thereof, may be more accurately targeted to the entity.

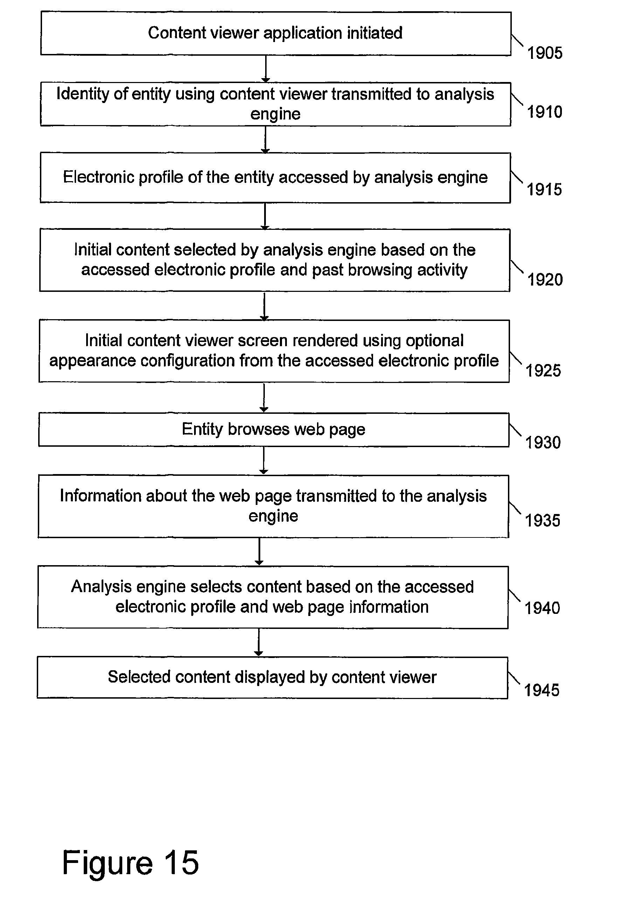

An example scenario for use of the content viewer 137 and analysis engine 125 will now be described with reference to Figure 15. The content viewer 137 is initiated 1905. This may occur, for example by starting up an Internet browser on the user device that is equipped with a browser plug-in including software to perform the user device functions described. In some embodiments, a separate application is started up on the user device that performs the functions of the content viewer 137. Once launched, the content viewer 137 may display an initial content set. The initial content may be a default selection of advertisements, links, rich media, or combinations thereof. In other embodiments, the initial content may be selected based on the electronic profile of the entity. In such an embodiment, the identity of the entity operating the content viewer 137 is transmitted 1910 to the analysis engine 125. The entity may be identified in substantially any manner, including by logging into the content viewer 137 with a username, password, or both, or by transmitting an identification of the user device 130 to the analysis engine 125. Having received an indication of the identity of the entity, the analysis engine 125 may access 1915 the stored electronic profile associated with the entity. The initial content may be selected 1920 based on the electronic profile of the entity, in some embodiments in combination with known past browsing history of the entity, which may also be stored in the entity's electronic profile. The initial content viewer display may be rendered 1925 using appearance settings stored in the entity's electronic profile, such as by displaying a wallpaper, skin, or brand stored in the entity's electronic profile. In this manner, the initial information displayed by the content viewer 137 may be a default setting, or selected based on the entity's profile, past browsing history, or both.

The entity then browses 1930 to a web page using an Internet browser or similar viewer, or in other embodiments the entity accessed any type of network accessible content in any manner. Information about the web page visited, or content accessed, by the entity is transmitted 1935 to the analysis engine 125. The information, as described above, may include metadata associated with the web page, a URL, content of the web page, or combinations thereof. In embodiments where the network accessible content accessed is not a web page, the information transmitted may include metadata associated with the accessed content, terms or other features of the content, a location of the content, a file type, and one or more protocols associated with the content, or combinations thereof. The analysis engine 125 selects 1940 content based on the entity's electronic profile and the web page information received. The selected content is then displayed 1945 by the content viewer 137. In this manner, as an entity browses to different web pages, or accesses different network accessible content, the displayed content in the content viewer 137 may change accordingly.

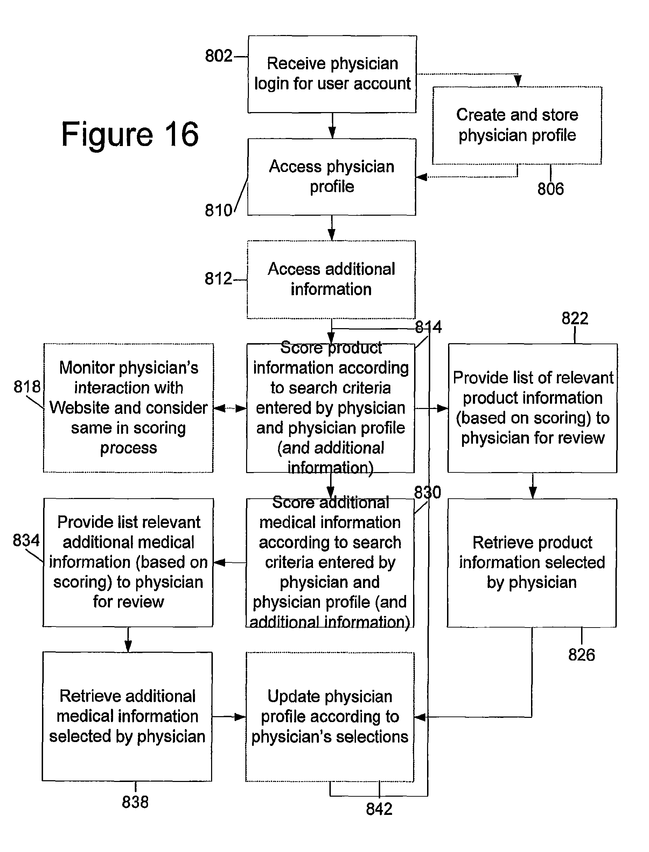

In another embodiment, the system 100 shown in Figure 1 is used to provide a physician visiting a Website of a manufacturer of medical products with relevant product information based on a physician's profile as well as additional information, such as, the physician's interaction with the manufacturer's Website. As previously discussed, the term "profile" means an electronic profile as well as some or all of the profile attributes of an electronic profile. Additional relevant medical information, for example, trends, anomalous results, research articles, published studies, other medical publications, can also be provided to the physician where elected by the physician to receive such information to enhance the research. For example, using the system 100 a pharmaceutical manufacturer can provide relevant product information to a physician that visits the manufacturer's Website in search of drug reaction information for one of the manufacturer's drugs. Operation of an example system will be described with reference to Figures 1 and 16.

The physician can log into 802 a user account from the user device 130 to access a physician portal from which the physician can obtain information on the manufacturer's products. The user account is associated with a profile for the physician that is stored by the electronic profile storage 140 and accessed 810 by the profile management interface 135. That is, the physician is a profile owning entity, as previously discussed. Additional information may be optionally analyzed 812 as well, including but not limited to previously visited Websites, recently reviewed documents or cases, patient records, and electronic profiles for physicians having similar profile attributes (e.g., area of practice, specialty, etc.). Where a profile has not yet been created for the physician, for example, when the physician creates a new account, a profile can be created and stored for the physician 806.

The physician's profile may include, various information, for example, medical specialty, research interests, practice profile, education, location of practice, as well as many other types of information related to the physician. The profile for the physician can be developed in a manner as previously described.

In researching the drug of interest, the physician may enter search criteria in a search window available in the drug manufacturer's Website. The search criteria and the request for analysis by the analysis engine 125 is provided by the provider device 145 to the profiling system 110. Based on the search criteria and the physician's profile accessed by the profile management system 115 (as well as any additional information accessed at 812), the analysis engine 125 scores 814 the manufacturer's product information stored in the content storage 155. The results of the scoring are provided to the provider device 145. The most relevant product information, as determined by the scoring, is presented 822 on the user device 130 for selection 826 and review by the physician.

In addition to the manufacturer's product information, in response to the physician searching for product information for the particular drug of interest, and where elected by the physician to receive additional medical information, research articles, results of studies, and other publications identified by the profiling system 110 can also be presented to the physician. The analysis engine scores 830 the additional medical information based on the search criteria and the physician's profile (as well as any additional information accessed at 812) to identify the additional information that may likely be of interest to the physician.

The additional medical information of interest is provided 834 to the physician, which can then be selected 838 by the physician and viewed on the user device 130. The additional medical information can be stored in the content storage 155 in the form of the documents themselves, or in some embodiments, as links to the additional medical information, and provided to the physician as documents, links, or a combination of the two.

By providing the additional medical information to the physician in this manner, the physician's research may be enhanced through receipt of relevant information that the physician may have not otherwise been aware of or discovered through independent research.

As the physician continues to interact with the manufacturer's Website, for example, performing additional research for product information, navigating through the manufacturer's Website, selecting from the product and/or medical information presented, or some other interaction, the profile management interface 135 can optionally monitor 818 the physician's activity and update 842 the additional medical information provided to the physician by identifying medical information of greater relevancy refined by the activity. In some embodiments, the physician's profile is updated 842 with the activity so that it may be used at a later time by the profile management interface 135.

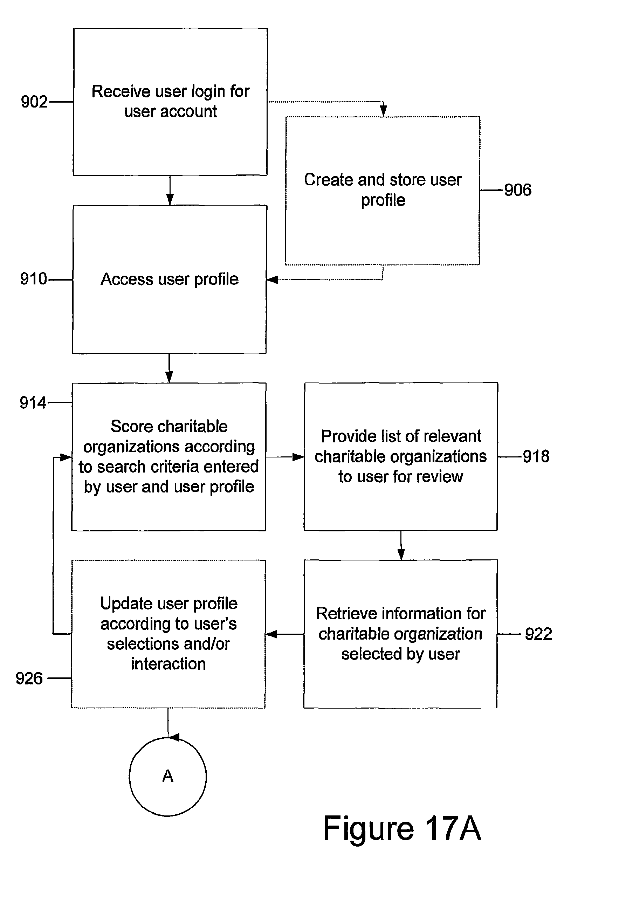

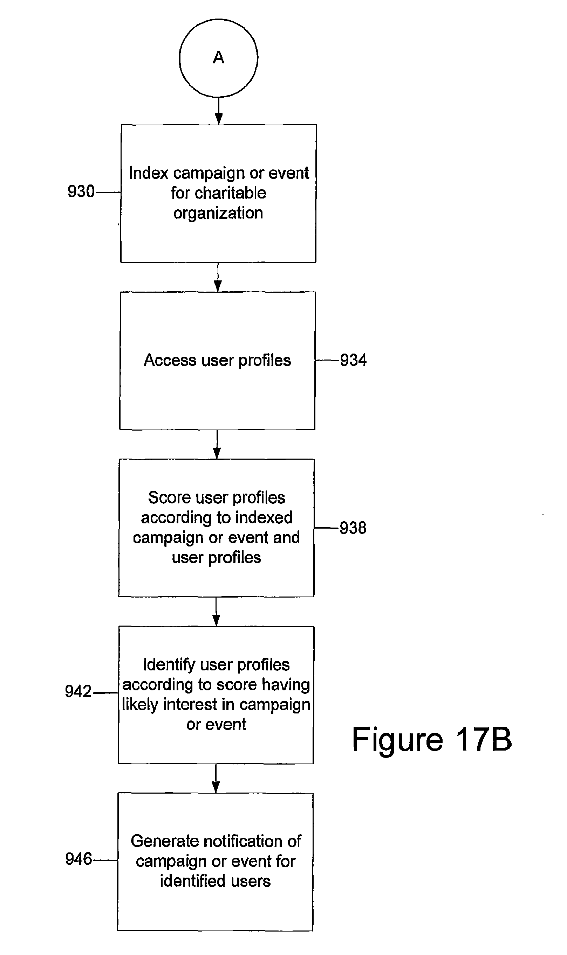

Figures 17A and 17B illustrate an embodiment of the invention for enhancing an experience for donating to charitable organizations. In the present example, various charitable organizations are suggested to a user based on the user's profile and search criteria. Additionally, in some embodiments, the user receives notifications, for example, in the form of electronic messages or invitations, of charitable organizations having events or campaigns that may be of interest to the user based on their profile.

A user can visit a Website for an entity that provides information on charitable organizations. Upon logging into 902 the user account through a user device 130, the profile management interface 135 communicates with the profile management system 115 to access 910 the user's associated profile stored in the electronic profile storage 140. Where no existing profile is stored in the electronic profile storage 140, the user can create 906 a profile that is associated with the user account. The profile attribute can include, for example, interests, preferred charities or types of causes, occupation, education, and other information for creating a profile that can be used in identifying charitable organizations to which the user may have interest in donating. User profiles can be created and updated as previously discussed.

The user can use a search option available at the entity's Website to locate charitable organizations matching search criteria entered by the user, as well as relying on the user's profile attribute. In some embodiments, the search criteria and a request for analysis is provided by the provider device 145 to the profiling system 110. In some embodiments, the search criteria and request are provided by the user device 130 to the profiling system 110.

The analysis engine 125 processes the user's search criteria and profile attribute and scores 914 various charitable organizations to rank the relevancy of the organizations in an effort to identify those that may be of interest to the user. Based on the scoring, a list of charitable organizations is presented 918 to the user. Summary information associated with each of the charitable organizations can also be provided. Links to the organizations can be provided as well to facilitate research of the organizations and donation thereto. Additional information, such as links to the charitable organization as well as detailed information for the event or campaign, are retrieved by the provider device 145 and provided 922 to the user device 130 in response to selection by the user.

In some embodiments, the user's interaction with the Website, such as the entered search criteria, charitable organizations selected from the list provided, is stored by optionally updating 926 the user's profile so that the information can be used in the future by the analysis engine 125.

The body of charitable organizations that are scored represent at least a portion of the content stored in the content storage 155. The organizations are those that have created a relationship with the entity providing the Website to be included as an organization that can be offered to those visiting the Website.

As previously mentioned, in some embodiments the system provides notifications and ongoing access to of charities having events, campaigns or ongoing needs that may be of interest to the user. For example, where a charitable organization is beginning a fundraising campaign, requesting ongoing contributions or publicizing an event, and the user has elected to receive notifications of such, the system can identify those users having a profile that may have interest in receiving notice of the campaign, or event, or interest in participating in ongoing contributions, with the notification appearing for example at a church, in a retail location, or at a sports or entertainment venue, on static or dynamic signage or billboard.

The entity receives information from the charitable organization of a campaign or event that it wants to be publicized. The information from the organization is indexed 930 (Figure 17B) so that the analysis engine 125 can identify the users for which the charity, campaign or event would be scored highly based on user profiles stored in the electronic profile storage 140. The analysis engine 125 accesses 934 the user profiles and "reverses" the process by using the user profiles and the indexed information to identify those users that would find interest in the information. That is, users are identified based on the content (information for the charity, campaign or event), rather than content identified based on the user (profile and search criteria).

In some embodiments, the analysis engine 125 processes the indexed information and user profiles by scoring 938 the user profiles in the electronic profile storage 140 against the event/campaign information and identifying 942 those users for which the indexed information has a score greater than a threshold, or based on another explicit trigger such as a purchase at a retail shop the value amount then being rounded to the nearest dollar for the charitable contribution. For those users, it is assumed the information is relevant, and the users would have interest in receiving notification of the information, that is, notification of the campaign or event.

The analysis engine 125 returns a list of those users that are identified to likely have interest in receiving the information. The provider device 145 processes the list of users and generates 946 notices that are delivered to those identified users, for example, by electronic mail notification, an alert presented to users upon logging into their accounts, or other notification techniques.

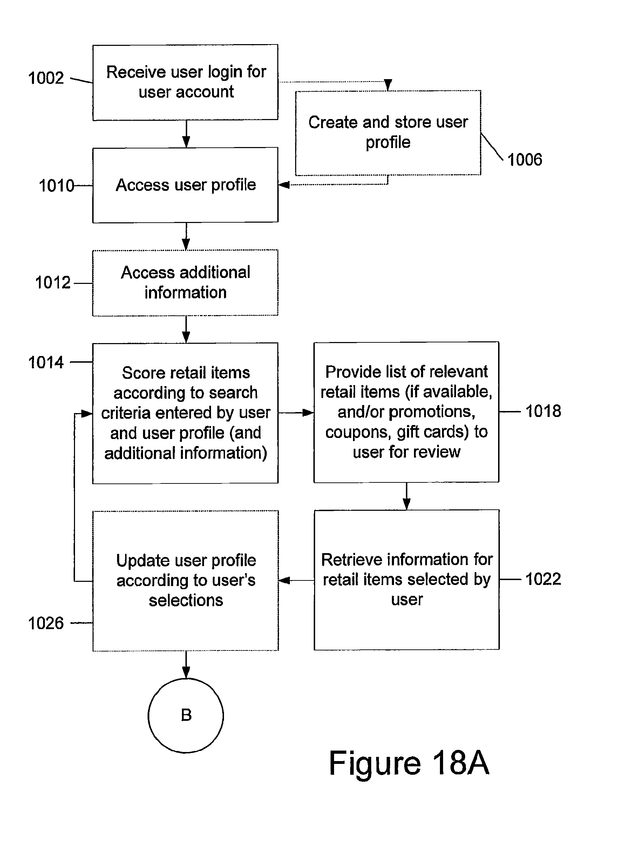

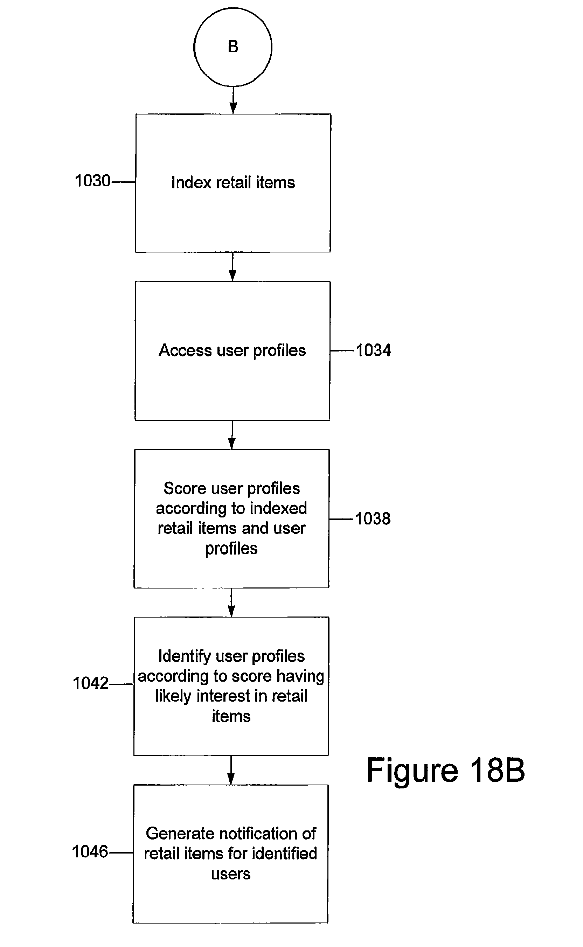

In another embodiment, the system 100 is used for sale and/or promotion of retail items by providing suggested items in response to a search by a user, and additionally or alternatively, provide notification to users that may find new retail items of interest and associated items and data. Figures 18A and 18B illustrate such an example according to an embodiment of the invention.

Where items are suggested based on search criteria entered by the user, a profile associated with the user's account is used in addition to the search criteria entered by the user. The associated profile is created 1006 by the user and stored in the electronic profile storage 140 for access by the profile management interface 135 and the profile management system 115 upon logging in 1002 by the user. The profile may include information related to the preferences, likes and dislikes, personal information, birthdays, holidays, and other information that may be used for defining a profile of the user. The user's profile can be created and modified as previously discussed.

A search option available at the retailer's Website allows the user to specify a search for items of interest. In addition to the search terms entered by the user, the user's profile is accessed 1010 used by the analysis engine 125 when scoring 1014 the retail items stored in the content storage 155. Retail items may include such items as, but not limited to, the retailer's content, promotions, advertisements, warranty information, gift cards, retailers, vendors, retail domains, retail categories, merchandise, merchandise types, and other information related to retail. Additional information, which may include but not limited to, items of previous interest to the user, user purchase history, may be optionally accessed 1012 by the analysis engine 125 and used for scoring 1014 the retail items when accessed. The analysis engine 125 provides the results of the scoring to the provider device 145, and is used by the provider device 145 to provide a list 1018 of the retailer's items to the user device 130 that are relevant to the user's search and profile, and likely of interest to the user. As previously discussed, the number of items in the list provided by the retailer to the user may be based on a score threshold and/or number of listed items. In some embodiments, the content provided to the user may be in the form of links to more information about the particular item. Additional information for a retail item can be retrieved 1022 and provided to the user upon selection.

In some embodiments, the user's interaction with the retailer's Website, such as the entered search criteria, charitable organizations selected from the list provided, is stored by optionally updating 1026 the user's profile so that the information can be used in the future by the analysis engine 125.

In some embodiments, user profiles are used by the retailer to provide users with notification of retail items that may be of interest. That is, the retailer finds users based on the content and the user profiles, and where the user has opted to receive notifications, the notifications are provided to alert the users of the content.

For example, the retailer is interested in selling retail items in inventory. The retail items are indexed 1030 (Figure 18B) accordingly so that user profiles stored in the electronic profile storage can be accessed 1034 and scored 1038 by the analysis engine 125 to identify the user profiles that are relevant to the items. Based on the scoring, user profiles are identified 1042 as having likely interest in the retail items and related items such as warranties, accessories or item-specific data. For example, the user profiles having the higher scores are assumed to likely be interested in receiving notification of the items. The results of scoring the user profiles are provided by the profiling system 110 to the provider device 145. The retailer generates 1046 notifications for the items for the users having profiles that scored highly and opted to receive such notifications. Scoring the user profiles based on retail items can enhance the retail experience for users as well as the retailer by making users aware of items of interest and providing the retailer with a technique for managing the retailer's inventory.

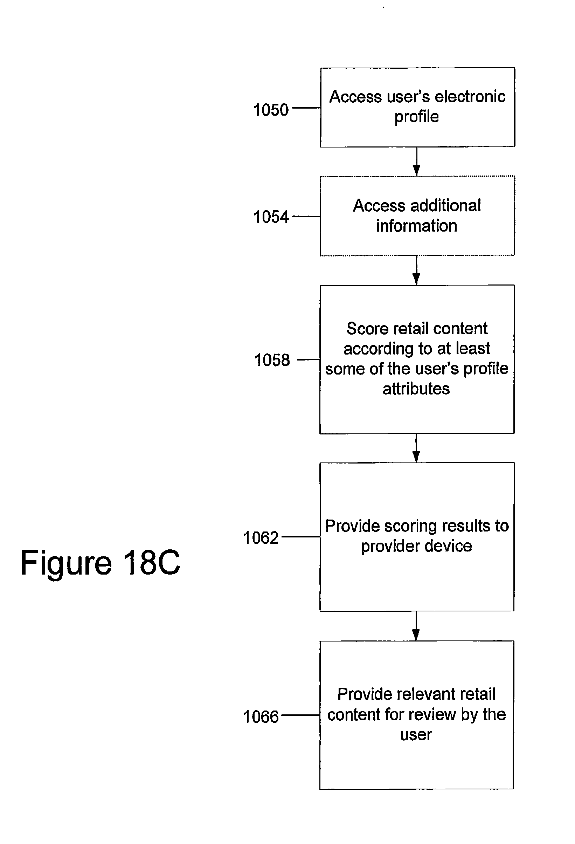

In another embodiment of the invention, the system 100 may be used for providing retail content to a user. Figure 18C illustrates such an example according to an embodiment of the invention.

The user's electronic profile stored in the electronic profile storage 140 is accessed 1050 by the analysis engine 125 to identify content stored in the content storage 155 that may be relevant, that is, of interest for purchase by the user, in accordance with at least profile attributes of the user. The content may include such items as, but not limited to, the retailer's content, promotions, advertisements, warranty information, gift cards, retailers, vendors, retail domains, retail categories, merchandise, merchandise types, and other information related to retail.

The analysis engine 125 scores 1058 the content according to at least profile attributes for the user. Additional information, for example, profile attributes of electronic profiles for other entities stored in the electronic profile storage 145, items of previous interest to the user, user purchase history, may optionally be accessed 1054 and considered by the analysis engine 125 for scoring content. The additional information is not intended to be limited to that previously described and may include other types of additional information without departing from the scope of the present invention.

Content stored in the content storage 155 is accessed through the content scoring interface 150 of the provider device 145 by the analysis engine 125 and the content items scored 1058 based on profile attributes of one or more of the electronic profiles stored in electronic profile storage 140, for example, at least some of the profile attributes of the user's electronic profile. The analysis engine 125 provides 1062 the content scoring results to the provider device 145, which is used to identify relevant content that may be of interest to the user.

Information regarding relevant content can be provided 1066 to the user on the user device 130 in response to an express request from the user. For example, the user inputs a request for content, such as suggestions for retail items of interest, and related information and promotional material, alternative items, and other information, to be provided by the provider device 145.

In an alternative embodiment, the provider device 145 automatically provides 1066 content to the user device 130. For example, the provider device 145 may provide information to the user device 130, such as a portable electronic device, based on proximity of the portable electronic device (i.e., the user) to a retail item that may be of interest (i.e., relevant based on the score) to the user. The user's location information may be determined based on various techniques, including but not limited to, location information obtained from the portable electronic device, such as a cellular phone, personal digital assistant having GPS capabilities. Other location techniques known to those ordinarily skilled in the art may be used as well without departing from the scope of the present invention. Thus, when a user carrying a portable electronic device (user device 130) that can receive content from the provider device 145 is in proximity to a retail item of interest, the user may be notified. As previously described, the content may include information for the particular retail items, such as warranties, reviews, service records, reports, information for related items of interest, promotions for the retail items, including advertisements, offers for gift cards, and other offers. Information and offers for items related to the particular retail items may be provided as well. For example, in a case where the retail item of interest is a personal computer, the information and offers provided to the user may include information and offers for computer peripherals and computer accessories.

Providing notification and information of retail content as previously described may enhance the retail experience for a user.

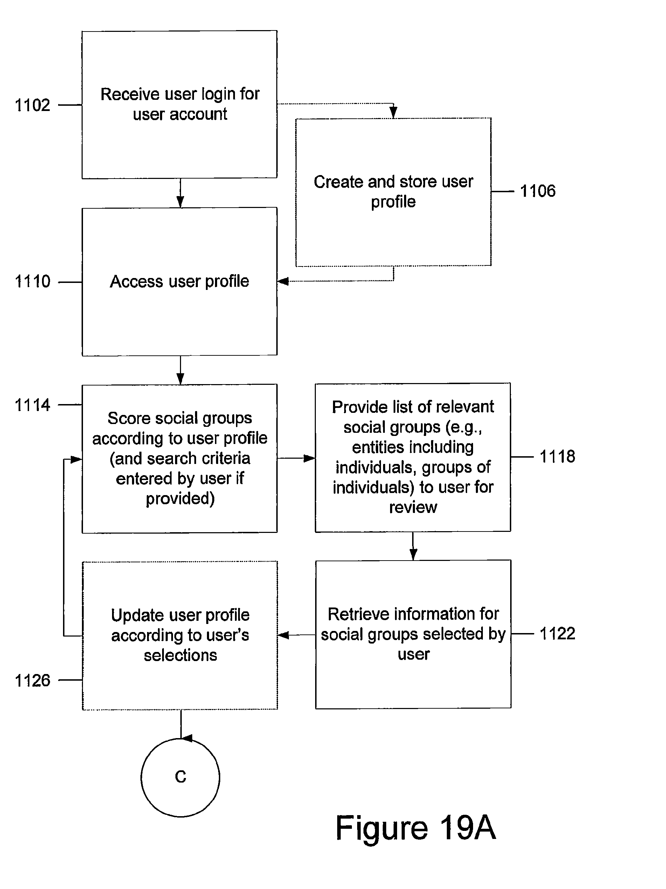

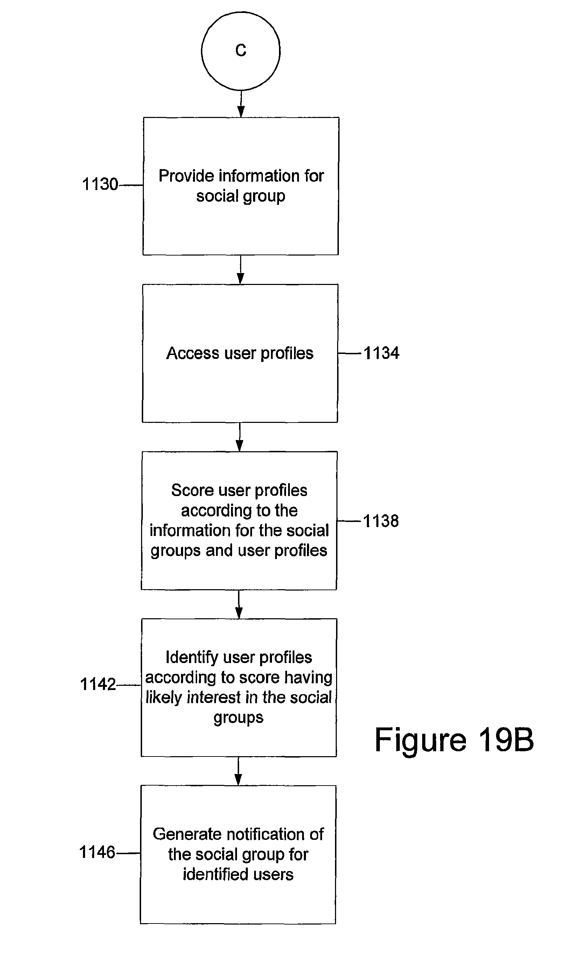

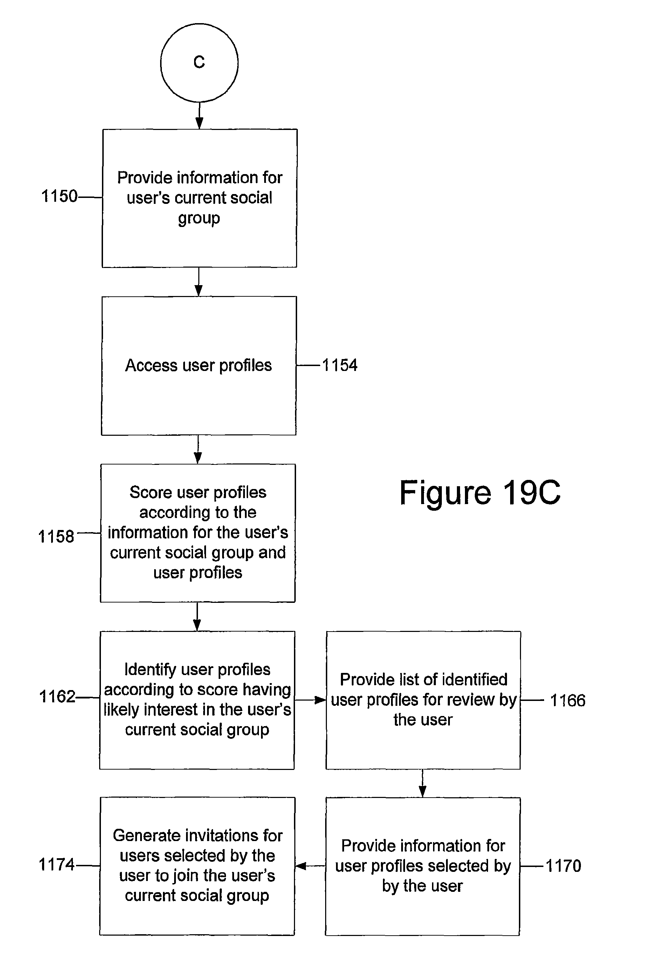

In another embodiment of the invention, the system 100 can be used for creating a social network, as illustrated in Figures 19A, 19B, 19C. That is, the system 100 can use profiles of users to suggest, match, and create social connections between the users having profiles, or to external people, organizations, sites, links or data content of interest.

With reference to Figure 19A, a user logs into 1102 a user account at a social network Website. The user account has a profile associated with it that is stored in the electronic profile storage 140. Where a profile has yet to be created, for example, where the user has just created a user account with the Website, the user can create 1106 a profile. The user's profile can include information about the user and preferences, for example, name, birthday, address, profession, hobbies, affiliations and organizations, current social connections, and other information that can be used to create a profile for a user that can be used by the analysis engine to score other user profiles and social group profiles against a particular user's profile.

The Website can be used to create social connections for the user. In some embodiments, the user can request recommendations for social groups to join based on the user's profile. The social groups may range in size from an individual to a plurality of individuals, and may include people, entities, fragments of interest, or combinations thereof. The user may also provide search criteria that is used by the analysis engine 125 in combination with the user's profile to recommend social groups of interest. The social groups can be content stored in the content storage 155. The user request is provided to the provider device 145, which in turn generates a request for the analysis engine 125 to access 1110 the user's profile and score 1114 the social groups against the user's profile, and against the search criteria where provided. In some embodiments, the analysis engine scores social groups against the user's profile at least in part on the expertise, interest or knowledge of other people having profiles that may be relevant to user's interests. The expertise, interest or knowledge may be measured against, for example, a person's profession, occupation, publications, experience, activities, and other information that may suggest expertise of a body of knowledge. The results of the scoring are provided 1118 by the profiling system 110 to the provider device 145 so that a list of recommended social groups are provided to the user. The user can select user groups from the list to obtain 1122 more information about the selected social group.

In some embodiments, the search criteria and the selection of social groups from the list can be used to update 1126 the user's profile.

The Website may also generate and provide notifications for users having profiles stored in the electronic profile storage 140 when a new social group is created. For example, the provider device 145 provides 1130 (Figure19B) information regarding the new social group to the profiling system 110 along with a request for the analysis engine 125 to access 1134 and score 1138 the profiles against the information for the new social group. The information provided 1130 may include, but is not limited to, blogs to show fragments of interest. The results of the scoring are provided to the provider device to identify 1142 those users that may have interest in joining the new social group. For those users that have opted to receive such notifications, and that have been identified as likely having an interest, an electronic notification is generated 1146 and provided by the provider device 145 to those users.

The Website may also be used in some embodiments by the user to recommend other users, based on their respective profiles, to have join a social group to which the user belongs. For example, the request made by the user to the provider device 145 is provided 1150 (Figure 19C) to the analysis engine 125 along with information regarding the social group. The analysis engine 145 accesses 1154 the profiles through the profile management system 115 and scores 1158 the profiles against a profile for the social group. The results of the scoring are provided to the provider device 145 to identify 1162 which user profiles to provide 1166 to the user device 130 as recommended users to join the social group. Information for the users in the list can be retrieved and provided 1170 to the user upon selection. In some embodiments, an electronic invitation is generated 1174 by the provider device 145 and forwarded to the selected users.

As illustrated by the present example, profiles that are created, stored, and modified as previously discussed can be used by a system to create social networks. Such a system enhances social interaction among users by identifying and notifying users of social groups and the creation of social connections that are likely of interest to a user.

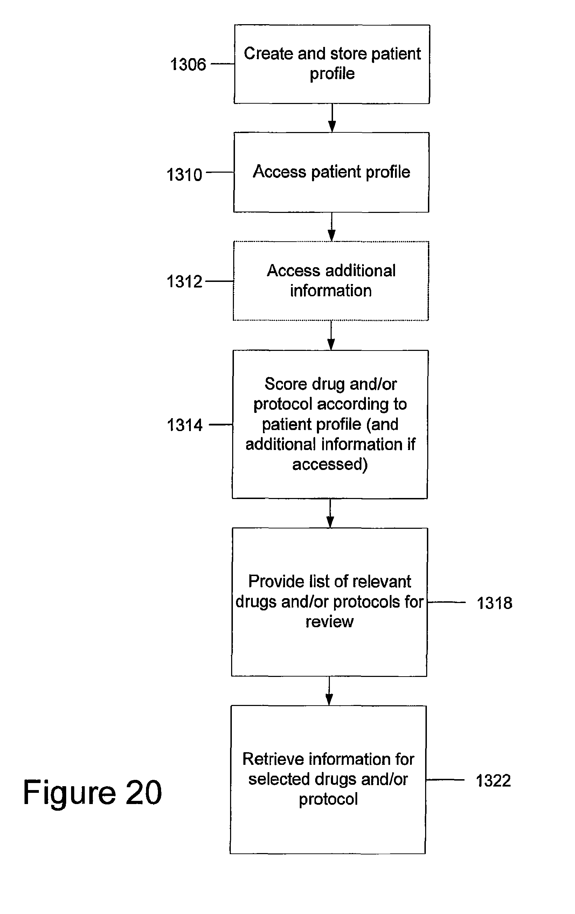

In other embodiments, the system 100 is used to tailor therapy for a patient. Figure 20 illustrates an embodiment of such a use of the system 100.

An electronic profile for a patient (i.e., profile owning entity) is created and stored 1306 in the electronic profile storage140. The patient's profile may include physical profile, medical history, imagery, genetic make-up, allergies, tumor or ailment profile, actual physical samples such as blood, proteins, bacteria or tumor cells, genetic receptors with associated response probabilities for a specific drug, and other information relevant to creating a tailored therapy for the patient. The patient's electronic profile may be created and updated as previously discussed.

The patient's electronic profile is accessed 1310 through the profile management system 115 by the analysis engine 125. Additional information may be optionally accessed 1312 as well. The additional information may include, but is not limited to, relevant research, medical trials, drugs, and treatment protocols.

The analysis engine 125 scores 1314 drugs and treatment protocols against the patient's profile, and additional information if accessed. The drugs and protocols are stored as content in the content storage 155 and accessed through the provider device 145. A list of drugs and protocols considered relevant to the patient according to the scoring is provided 1318 to the provider for review. Additional information related to the drug and information related to the protocols can be retrieved and provided 1322 upon selection of a listed item.

In alternative embodiments, a physician requests creation of a tailored therapy which in some instances could be a pharmaceutical drug. A user device 130 can be used by the physician to interact with the system 100. The physician can create 13 06 the patient profile which is stored in the electronic profile storage 140 and request a list of relevant drugs and/or protocols based on the patient's profile. In such embodiments, the results from the analysis engine are provided 1318 to the physician for review.

The patient's electronic profile can be updated (not shown in Figure 20) with symptom or diagnosis changes or reaction to a drug and protocol so that future analysis will consider the additional profile attributes.

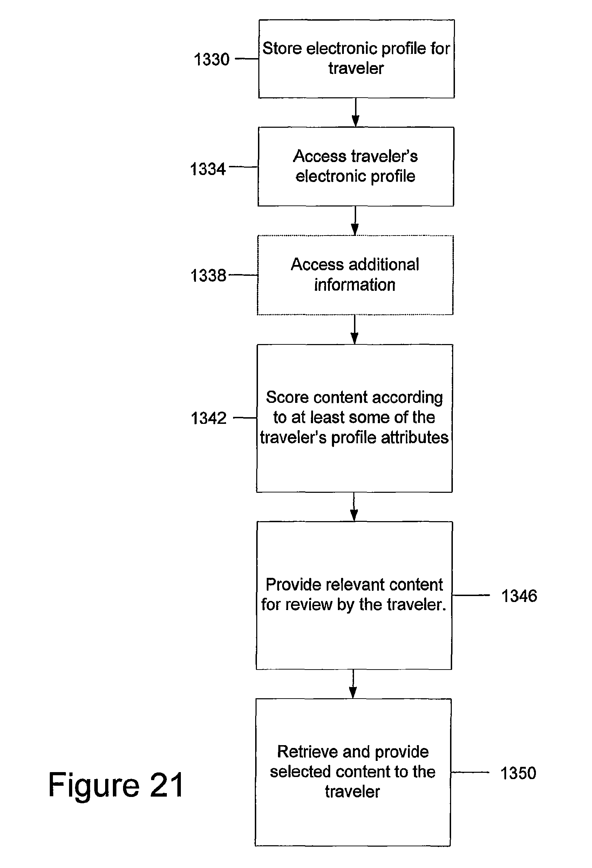

In another embodiment, the system 100 is used for providing information to a traveler that may be relevant. The information that is provided may enhance the travel experience for the traveler. Figure 21 illustrates such an example according to an embodiment of the invention.

The user's electronic profile stored 1330 in the electronic profile storage 140 includes profile attributes related to travel plans for the user, for example, destination, schedule, itinerary, reservations, and other information from which information related to the user's travel can be gathered.

The user's electronic profile is accessed 1334 by the analysis engine 125 to identify content relevant to the user's travel plans. Examples of the content stored in the content storage 155 can include, but is not limited to, travel information, flight status information, weather information, sales and retail promotions. The analysis engine 125 scores 1342 the content according to at least profile attributes for the traveler. Additional information, for example, profile attributes of electronic profiles for other entities stored in the electronic profile storage 145, may optionally be accessed 1338 by the analysis engine 125 for scoring content. The additional information is not intended to be limited to profile attributes of electronic profiles for other entities and may include other types of additional information without departing from the scope of the present invention.

The analysis engine 125 can be invoked manually by the user, for example, by user input on the user device 130. In an alternative embodiment, the analysis engine 125 automatically, for example, based on the user's proximity to the departure location, such as the airport. The user's location information may be determined based on various techniques, including but not limited to, location information obtained from a portable electronic device, such as a cellular phone or personal digital assistant having GPS capabilities.

Content stored in the content storage 155 is accessed through the content scoring interface 150 of the provider device 145 by the analysis engine 125 and the content items scored 1342 based on profile attributes of one or more of the electronic profiles stored in electronic profile storage 140, for example, at least some of the profile attributes of the user's electronic profile.

The analysis engine 125 provides the content scoring results to the provider device 145, which is used to identify relevant content to provide 1346 to the user on the user device 130. Selectable content selected by the user may be retrieved and provided 1350 to the user for review. In some embodiments, the types of content provided to the user device 130 is determined by the content provider. In some embodiments, the electronic profile stored in the electronic profile storage 140 for the user can include preferences as to the types of content to be provided to the user device 130. For example, the user's content preference for travel information can include flight status, weather information for the destination, and offers and promotions for hotels, rental car agencies, retailers, and other businesses that the user may request or is deemed relevant by the provider.

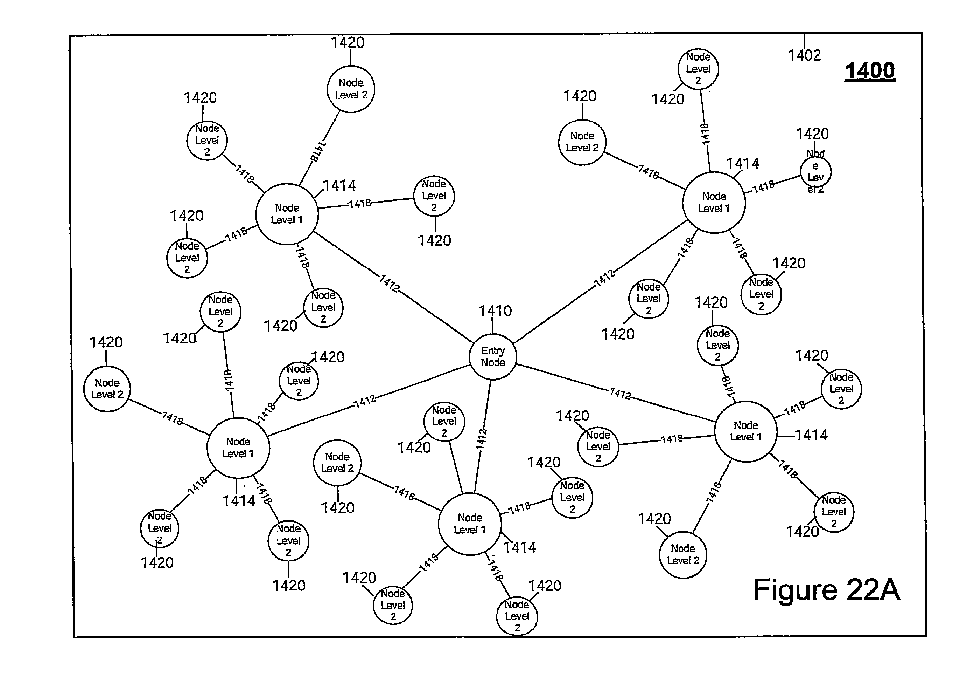

The information previously discussed with regard to the system 100 of Figure 1 may be displayed using user interfaces, and may be arranged according to their relevance to one another. Figure 22A illustrates a user interface 1400 that can be used in a system, such as system 100, for illustrating the relationship of information previously described and the selection thereof. For example, content, profiles, profile attributes, terms, documents, and other information that may be managed by the system 100 may be depicted by and selected through the user interface. The user interface 1400 may be displayed on a display 1402, for example, the content viewer 137 of the user device 130 as well as a display of the provider device 145 to provide an entity and provider, respectively, with a depiction of information and relationships of the information to each other. The user and provider devices 130 and 145 include a processor, display, and memory to store computer readable instructions that may cause the processor to implement the functionalities of the user interface 1400 described below.

The user interface 1400 includes an entry node 1410 to which level 1 (L1) nodes 1414 are connected by L1 connectors 1412. Level 2 nodes 1420 are connected to a respective L1 node 1414 by L2 connectors 1418. The entry node 1410 may depict information to which L1 and L2 nodes are related. The L1 nodes 1414 may depict information having relevance to the entry node 1410. The L2 nodes 1420 may depict information supporting the relevance of the respective L1 node. In some embodiments, the L2 nodes 1420 may depict additional information having relevance to the entry node 1410, but to a lesser extent than the respective L1 node to which the L2 node is connected. A L1 or L2 node1414, 1420 can be selected to become a new entry node ' 1410. The information depicted by the L1 and L2 nodes 1414, 1420 will have relevance to the information depicted by the new entry node 1412.

Characteristics of the nodes 1410, 1414, 1420 and the connectors 1412, 1418 can convey information. For example, although not shown in the line drawing of Figure 22A, colors and shades/intensities of color may be used to convey groupings of information, such as types of information, categories of information, L1 node information versus L2 node information, and/or other characteristics of the information depicted by the nodes of the user interface 1400. Highlighting of nodes may be used to convey selection of the information by an entity.

The size and shape of the nodes 1410, 1414, 1420 may be used to convey relativity of the information of a node to the information of other nodes, for example, number of times the information has previously been accessed, relevance of the information, quantity of information, and/or other relative characteristics of a node of information to one another. The positioning of the nodes 1410, 1414, 1420 relative to one another may be used to convey characteristics about the information of a node as well. For example, the distance of one node to another may depict relative relevance of the respective information, in some instances based on Hebbian strength of association. The length of the connectors connecting the nodes may be longer or shorter depending on the different distances. The node location within in a region, a coordinate space, range of angles, or other positional information may convey a category, class, type of information. Other characteristics of the nodes and connectors may be used to convey information as well without departing from the scope of the invention. The previously described examples are intended to be non-limiting examples.

Figure 22A illustrates the nodes 1410, 1414, 1420 and the connectors 1412, 1418 in two-dimensional space. However, in some embodiments, the nodes and connectors can be depicted in a three-dimensional space. Additionally, the number of levels of nodes (i.e., two levels in Figure 22A, L1 and L2 nodes) may be increased or decreased from that shown in Figure 22A. The number of nodes connected to another node may be fewer or greater than that shown in Figure 22A without departing from the scope of the invention. Furthermore, connections may or may not be shown, or may be alternatively represented, for example through thickened node walls, colors or through relative positioning in two- or three-dimensional space.

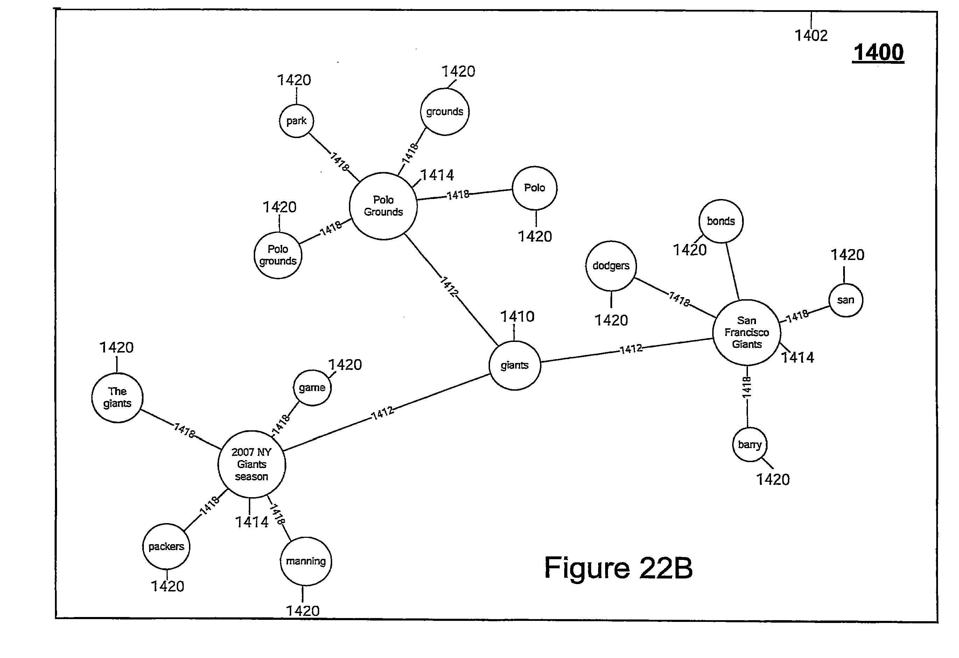

Figure 22B illustrates the user interface 1400 according to an embodiment of the invention. The user interface 1400 of Figure 22B is used for disambiguating a preference attribute. As previously discussed, the disambiguation engine 120 (Figure 1) may provide a list of relevant terms for refining a preference entry by an entity. The relevant terms can be selected by highlighting the respective node and confirming the addition of the term to the profile. The example of Figure 22B illustrates disambiguation of the term "giants" based on sports related expert content. The term "giants" is depicted by the entry node 1410, and the suggested disambiguated terms based on the profile and expert content is depicted by the L1 and L2 nodes 1414, 1420. In the example of Figure 22B, the number of L1 nodes is three and the number of L2 nodes is four. As previously discussed, the number of L1 and L2 nodes depicting information may be modified without departing from the scope of the present invention.

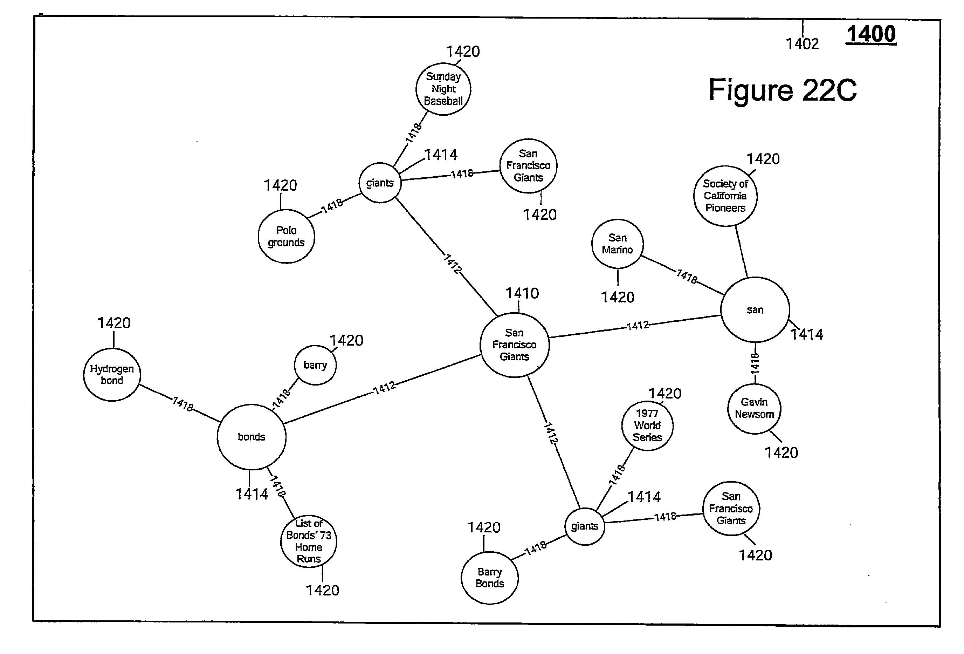

Figure 22C illustrates the user interface 1400 according to an embodiment of the invention. The user interface 1400 of Figure 22C is used for displaying content relevant to the search criteria "San Francisco Giants" based on sports related expert content. As previously discussed, relevant content delivered to the user device 130 can be displayed of a display 1402, such as the content viewer 137. Content can be selected by highlighting the respective node and confirming the selection of the content. The term "San Francisco Giants" is depicted by the entry node 1410, and the content stored in the content storage 155 identified by the analysis engine 125 as relevant are depicted by the L1 and L2 nodes 1414, 1420. In the example of Figure 22C, the number of L1 nodes is four and the number of L2 nodes is three. As previously discussed, the number of L1 and L2 nodes depicting information may be modified without departing from the scope of the present invention.

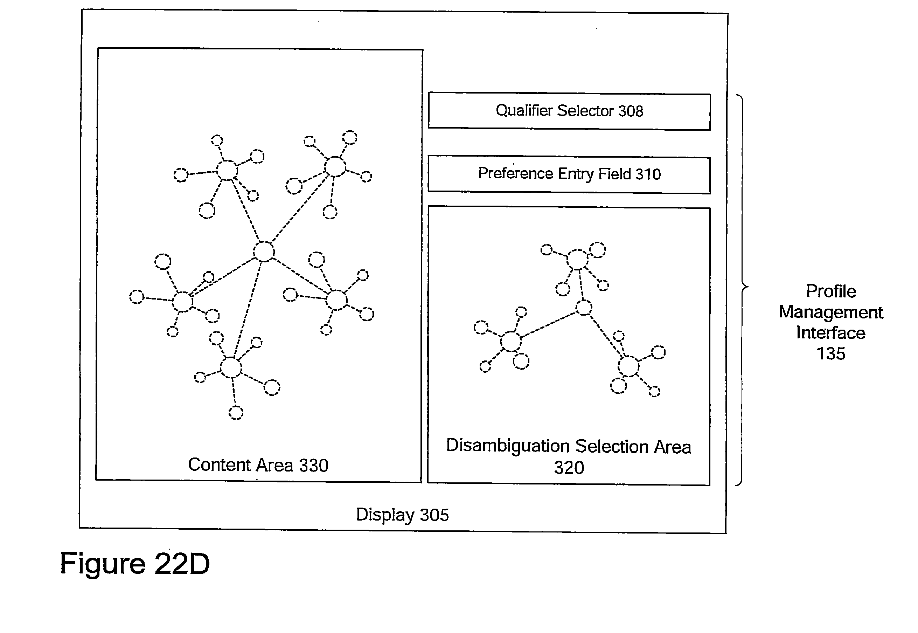

Figure 22D illustrates an example of the user interface 1400 displayed on the user device 130 of the system 100. As shown in Figure 22D, the user interface 1400 may be displayed on the content area 330 and/or the disambiguation selection area 320. The area in which the user interface 1400 is displayed may be dependent on the information depicted by the nodes and node connectors. For example, where the user interface 1400 depicts disambiguation information, it may be displayed in the disambiguation selection area 320. In another example, where the user interface 1400 depicts relevant content, it may be displayed in the content area 330. In alternative embodiments, the user interface 1400 is displayed on an area (note shown) of the display 305 that is not the content area 330 or the disambiguation selection area 320.

The user interface 1400 can be used to depict and select information, as previously described. Other examples of the information that may be depicted and selected include, relationship between an entity (entry node 1410), preference attribute (L1 nodes 1412), and bodies of expert content (L2 nodes 1420), relationship between a preference attribute (entry node 1410), bodies of expert content (L1 nodes 1412), and relevant content (L2 nodes 1420), disambiguating search criteria having an initial search term (entry node 1410), suggested relevant secondary search terms (L1 nodes 1412), suggested relevant tertiary search terms (L2 nodes 1420) and suggested relevant quaternary search terms (L3 nodes, not shown).

Examples of scoring content based on the profiles of profile owning entities and identifying related relevant terms have been described above in both an example of disambiguating preference information and scoring content for selection. Examples of predictive and deterministic actions based at least in part on the electronic profiles have been described as well the calculation of a relevance number based on profile attributes was described.

From the foregoing it will be appreciated that, although specific embodiments of the invention have been described herein for purposes of illustration, various modifications may be made without deviating from the spirit and scope of the invention.

In a further aspect, an apparatus comprises a system for providing selected content from a provider to an entity. The system includes a user system having a user interface, a display, a memory, and a processor coupled to the user interface, display and memory, the memory having computer readable instructions that, when executed cause the processor to receive information identifying the entity and search criteria for content entered by the entity through the user interface and to display selected content on the display. The system further includes a provider system configured to be in communication with the user system, the provider system having content storage, a memory, and a processor coupled to the content storage and the memory, the memory having computer readable instructions that, when executed, cause the processor to analyze scoring results for content stored in the content storage, access the content storage, and provide selected content to the user system in accordance with the scoring results. The system further includes a profiling system configured to be in communication with the user system and the provider system, the profiling system having a profile storage configured to store electronic profiles, the profiles associated with respective entities and including profile attributes for the respective entities, the profiling system further having a memory, and a processor coupled to the profile storage and memory, the memory encoded with computer readable instructions that, when executed, cause the processor to receive the information identifying at least one of the entity, an abstracted entity index, or combinations thereof and the search criteria from the user system. The system can also access the electronic profile associated with the entity, compute a degree of at least one of relevance, irrelevance, or combinations thereof of each content item according to the search criteria and the profile attributes of the entity to provide scoring results, and provide the scoring results for the content to the provider system.

The apparatus of the preceding aspect may further comprise a system wherein the content stored in the content storage comprises at least one of product information, advertisements, promotions, warranties, or combinations thereof for products of the provider. In the system, the content may be stored in the content storage further comprises secondary information related to a field in which the products are included, and the memory of the profiling system further includes computer readable instructions that, when executed, cause the processor to compute a degree of at least one of relevance, irrelevance, or combinations thereof for the secondary information according to the search criteria and the profile attributes of the entity. In the system, the secondary information may comprise at least one of systems components, peripherals, other products associated with the primary product, or combinations thereof.

The apparatus of the preceding aspect may further comprise a system wherein the content stored in the content storage comprises information for retail items from the provider.

The apparatus of the preceding aspect may further comprise a system wherein the content stored in the content storage comprises information for charitable organizations.

The apparatus of the preceding aspect may further comprise a system wherein the memory of the profiling system further includes computer readable instructions that, when executed, cause the processor to update profile attributes of the entity according to the entity's selections of the selected content provided by the provider system.

The apparatus of the preceding aspect may further comprise a system wherein the memory of the profiling system further includes computer readable instructions that, when executed, cause the processor to infer profile attributes of the entity and add the same to the entity's electronic profile stored in the profile storage. In the system, the processor may be configured to infer profile attributes of the entity based on at least one of existing profile attributes included in the entity's electronic profile, profile attributes included in electronic profiles for other entities, entity's behavior, or combinations thereof.

The apparatus of the preceding aspect may further comprise a system wherein the profiling system comprises a profile management system configured to receive information from the user system and generate the electronic profiles stored in the profile storage. The system further includes an analysis engine configured to score content items based on one or more of the electronic profiles stored in profile storage. The system may further comprise a disambiguation engine configured to receive profile attributes from the user system and process the attributes to reduce at least one of ambiguity, noise, or combinations thereof in the information provided.

The apparatus of the preceding aspect may further comprise a system wherein the memory of the profiling system is encoded with computer readable instructions that, when executed, cause the processor to compute a degree of at least one of relevance, irrelevance, or combinations thereof comprises a memory encoded with computer readable instructions that, when executed, cause the processor to compute a degree of irrelevance for at least some of the content items.

The apparatus of the preceding aspect may further comprise a system wherein the memory of the profiling system encoded with computer readable instructions that, when executed, cause the processor to compute a degree of at least one of relevance, irrelevance, or combinations thereof comprises a memory encoded with computer readable instructions that, when executed, cause the processor to compute a degree of at least one of relevance, irrelevance, or combinations thereof for each content item according to the search criteria, profile attributes of the entity, and profile attributes from electronic profiles for other entities.

The apparatus of the preceding aspect may further comprise a system wherein the memory of the profiling system encoded with computer readable instructions that, when executed, cause the processor to compute a degree of at least one of relevance, irrelevance, or combinations thereof comprises a memory encoded with computer readable instructions that, when executed, cause the processor to compute a degree of at least one of relevance, irrelevance, or combinations thereof for each content item according to the search criteria, profile attributes of the entity, and additional information, the additional information being relevant to the entity based on at least the electronic profile associated with the entity, electronic profiles associated with other entities, the search criteria, or combinations thereof.

The apparatus of the preceding aspect may further comprise a system wherein the content stored in the content storage comprises drug information and the entity comprises at least one of a patient, the patient's physician, or combinations thereof, the electronic profile stored in the profile storage for the patient having at least medical history for the patient, genetic information for the patient, or combinations thereof, the memory of the profiling system further includes computer readable instructions that, when executed, cause the processor to provide the scoring results for the drug information to the provider system to identify a least one of drugs, treatment programs, or combinations thereof relevant to the patient.

In a further aspect, an apparatus comprises a system for providing notification of selected content from a provider to an entity. The system includes a user system having a user interface, a display, a memory, and a processor coupled to the user interface, display and memory, the memory having computer readable instructions that, when executed cause the processor to display a notification for selected content in response to receiving the same. The system further includes a provider system configured to be in communication with the user system, the provider system having content storage, a memory, and a processor coupled to the content storage and the memory, the memory having computer readable instructions that, when executed, cause the processor to analyze scoring results for selected content stored in the content storage and generate electronic messages for entities identified by the scoring results that provide information regarding the selected content. They system further includes a profiling system configured to be in communication with the user system and the provider system, the profiling system having a profile storage configured to store electronic profiles, the profiles associated with respective entities and including profile attributes for the respective entities, the profiling system further having a memory, and a processor coupled to the profile storage and memory. The memory encoded with computer readable instructions that, when executed, cause the processor to receive information for the selected content from the provider system, access electronic profiles, compute a degree of at least one of relevance, irrelevance, or combinations thereof for the electronic profiles according to the information for the selected content and the profile attributes of the entities to provide scoring results, and provide the scoring results for the electronic profiles to the provider system.

The apparatus of the preceding aspect may further comprise a system wherein the selected content stored in the content storage comprises at least one of information for retail items, promotions, programs, data or combinations thereof from the provider. In the system, the content stored in the content storage may comprise at least one of gift cards, retailers, promoter channel or sponsor, personalization content and associated data, or combinations thereof. In the system, the content stored in the content storage may comprise at least one of travel information, weather information, promotional information for various destinations, flight status, or combinations thereof.

The apparatus of the preceding aspect may further comprise a system wherein the content stored in the content storage comprises information for charitable organizations.

The apparatus of the preceding aspect may further comprise a system wherein the content stored in the content storage comprises social groups, social connections, or combinations thereof.

The apparatus of the preceding aspect may further comprise a system wherein the user system comprises a portable electronic device. In the system, the portable electronic device may interact with the provider system to determine at least one of presence or proximity of the user system to a marker of content in the content storage triggering the process of receipt of information on the content and contributing to the computation of a degree of at least one of relevance, irrelevance, or combinations thereof.

The apparatus of the preceding aspect may further comprise a system wherein the provider system comprises a content scoring interface configured to provide access to the content stored in the content storage and receive the scoring results from the profiling system.

The apparatus of the preceding aspect may further comprise a system wherein the user device comprises a profile management interface configured to communicate with the profiling system to create, modify, or combinations thereof profile attributes of the electronic profiles.

The apparatus of the preceding aspect may further comprise a system wherein the memory of the profiling system encoded with computer readable instructions that, when executed, cause the processor to compute a degree of at least one of relevance, irrelevance, or combinations thereof comprises a memory encoded with computer readable instructions that, when executed, cause the processor to compute a degree of irrelevance for at least some of electronic profiles.

In a further aspect, a method comprises providing selected content from a provider to an entity. The method includes storing electronic profiles, each of the electronic profiles including at least one profile attribute for a respective entity. The method further includes receiving information identifying an entity and search criteria, accessing the electronic profile associated with the entity, computing a degree of at least one of relevance, irrelevance, or combinations thereof of provider content according to the search criteria and the profile attributes of the entity to provide scoring results, analyzing the scoring results for the provider content, and providing selected content to the entity in accordance with the scoring results.

The method of the preceding aspect may further comprise computing a degree of at least one of relevance, irrelevance, or combinations thereof of secondary content according to the search criteria and the profile attributes of the entity to provide secondary scoring results, analyzing the secondary scoring results, and providing selected secondary content to the entity based on the secondary scoring results.

The method of the preceding aspect may further comprise providing selected content from a provider to an entity wherein computing a degree of at least one of relevance, irrelevance, or combinations thereof of provider content comprises computing a degree of irrelevance for at least some of the provider content.

The method of the preceding aspect may further comprise providing selected content from a provider to an entity wherein computing a degree of at least one of relevance, irrelevance, or combinations thereof of provider content comprises computing a degree of at least one of relevance, irrelevance, or combinations thereof according to the search criteria, profile attributes of the entity, and profile attributes from electronic profiles for other entities.

The method of the preceding aspect may further comprise providing selected content from a provider to an entity wherein computing a degree of at least one of relevance, irrelevance, or combinations thereof of provider content comprises computing a degree of at least one of relevance, irrelevance, or combinations thereof according to the search criteria, profile attributes of the entity, and additional information, the additional information being relevant to the entity based on at least the electronic profile associated with the entity, electronic profiles associated with other entities, the search criteria, or combinations thereof.

The method of the preceding aspect may further comprise providing selected content from a provider to an entity wherein the provider content comprises drug information and the entity comprises at least one of a patient, patient's physician, or combinations thereof, the electronic profile stored for the patient having at least medical history for the patient, biological data for the patient, imagery for the patient or combinations thereof, and wherein analyzing the scoring results comprises analyzing the scoring results for the drug information to at least one of isolate diagnosis, identify drugs or treatment programs, or combinations thereof relevant to the patient.

The method of the preceding aspect may further comprise providing selected content from a provider to an entity wherein the provider content comprises drug information and the entity user comprises at least one of a patient, patient's physician, or combinations thereof, the electronic profile stored for the patient having at least genetic information for the patient, and wherein analyzing the scoring results comprises analyzing the scoring results for the drug information to at least one of isolate diagnosis, identify drugs or treatment programs, or combinations thereof relevant to the patient.

The method of the preceding aspect may further comprise receiving information for selected content from the provider, accessing the electronic profiles for a plurality of entities, computing a degree of at least one of relevance, irrelevance, or combinations thereof for the electronic profiles according to the information for the selected content and the profile attributes of the entities to provide scoring results, analyzing the scoring results for selected content, selecting entities to deliver electronic messages that provide information regarding the selected content in accordance with the scoring results for the electronic profiles, and delivering electronic messages to the selected entities.

The method of the preceding aspect may further comprise inferring profile attributes for the entity and adding the same to the electronic profile associated with the entity. In the method, inferring profile attributes for the entity may comprise inferring profile attributes for the entity based on at least one of existing profile attributes included in the entity's electronic profile, profile attributes included in electronic profiles for other entities, entity's behavior, or combinations thereof.

The method of the preceding aspect may further comprise updating profile attributes of the electronic profile associated with the entity based on entity selection of the content provided to the entity.

In a further aspect, an apparatus comprises a user device for use by an entity. The user device includes a display, a processor coupled to the display, and a memory, the memory encoded with computer readable instructions that, when executed, cause the processor to receive a search criteria entered by the entity, receive content items and respective relevance scores associated with each content item, the relevance score computed based in part on a stored electronic profile associated with the entity, the search criteria, and indexed information for each content item, render at least one of the content items on a display of the user device, the content items rendered as first-level nodes connected to an entry node by first-level connectors, the search criteria rendered as the entry node, each of the first-level nodes having at least one second-level node connected thereto by a respective second level connector, indexed information on which the relevance score of the respective content items is based rendered as a respective second-level node.

The apparatus of the preceding aspect may further comprise a device wherein the display comprises a display physically unconnected from the user device.

The apparatus of the preceding aspect may further comprise a device wherein the memory encoded with computer readable instructions that, when executed, cause the processor to render at least one of the content items on a display of the user device comprising a memory encoded with computer readable instructions that, when executed, cause the processor to render content items on a display of the user device, the content items rendered as first-level nodes having a size based at least in part on the computed score for the respective content item.

The apparatus of the preceding aspect may further comprise a device wherein the memory encoded with computer readable instructions that, when executed, cause the processor to render at least one of the content items on a display of the user device comprising a memory encoded with computer readable instructions that, when executed, cause the processor to render content items on a display of the user device, the content items rendered as first-level nodes having a distance from the entry node based at least in part on the computed score for the respective content item.

The apparatus of the preceding aspect may further comprise a device wherein the memory encoded with computer readable instructions that, when executed, cause the processor to render at least one of the content items on a display of the user device comprising a memory further encoded with computer readable instructions that, when executed, cause the processor to receive selection of a node from the entity, receive content items and respective relevance scores associated with each content item, the relevance score computed based in part on a stored electronic profile associated with the entity, the search criteria, the selected node, and indexed information for each content item, and render the selected node as the entry node and render the content items as first- and second-level nodes according to the relevance scores relative to the entry node.

In a further aspect, the apparatus comprises a user device for use by an entity. The user device includes a display, a processor coupled to the display, a memory, the memory encoded with computer readable instructions that, when executed, cause the processor to receive a profile attribute entered by the entity, receive content items in accordance with respective relevance scores associated with each content item, the relevance score computed based in part on a stored electronic profile associated with the entity, the entered profile attribute, and indexed information for each content item, and render at least one of the content items on a display of the user device, the documents rendered as first-level nodes connected to an entry node by first-level connectors, the entered profile attribute rendered as the entry node, each of the first-level nodes having at least one second-level node connected thereto by a respective second level connector, indexed information on which the relevance score of the respective content items is based rendered as a respective second-level node.

The apparatus of the preceding aspect may further comprise a device wherein the memory encoded with computer readable instructions that, when executed, cause the processor to render at least one of the content items on a display of the user device comprising a memory further encoded with computer readable instructions that, when executed, cause the processor to receive selection of a node from the entity, adding the content item or indexed information rendered as the selected node as a profile attribute to the electronic profile associated with the entity, receive content items in accordance with respective relevance scores associated with each content item, the relevance score computed based in part on the stored electronic profile associated with the entity, the added profile attribute, the entered profile attribute, and indexed information for each content items, render the entered profile attribute and added profile attribute as the entry node and render the content items and respective indexed information as first- and second-level nodes according to the relevance scores relative to the entry node.

In a further aspect, a method for electronic profile management includes storing electronic profiles, each associated with a respective entity, in an electronic storage medium, each of the electronic profiles including at least one preference of the entity, receiving, at a profiling system in communication with the electronic storage medium, a request from an electronic device to evaluate options for a first entity, accessing the electronic profile associated with the first entity, and computing a degree of relevance of each option to the electronic profile of the first entity based in part on the preference of the entity.

The method of the preceding aspect may further comprise transmitting to the electronic device at least one of the computed degrees of relevance, an indication of selected options based on the computed degrees of relevance, or combinations thereof.

The method of the preceding aspect may further comprise electronic profile management wherein the act of storing electronic profiles comprises storing electronic profiles in a relational database on the electronic storage medium.

The method of the preceding aspect may further comprise electronic profile management wherein each respective entity comprises a person, thing, segment of people, or segment of things.

The method of the preceding aspect may further comprise electronic profile management wherein the act of receiving a request from an electronic device comprises receiving a request from a provider, the provider being different than the entity. In the method, the electronic profiles may further include respective permissions, and the act of transmitting to the electronic device occurs only if the permissions associated with the first entity allow for communication with the provider.

The method of the preceding aspect may further comprise electronic profile management wherein the options comprise a plurality of content items, the act of computing the degree of relevance comprises indexing the plurality of items according to terms, and querying the index using the preference of the entity. In the method, the act of computing the degree of relevance may comprise computing a relevance number, the relevance number computed based on term frequency and inverse document frequency calculations for each content item using the preference. In the method, the preference may comprise a plurality of preference terms, the relevance number computed in part by summing term frequency and inverse document frequency calculations using each preference term. In the method, the electronic profile may comprise a plurality of preferences, and the relevance number is computed in part by summing respective relevance numbers calculated using each of the plurality of preferences. In the method, the act of summing respective relevance numbers may comprise taking a weighted sum of the respective relevance numbers, and wherein a weight associated with each preference is determined in part based on a context of the entity.

The method of the preceding aspect may further comprise electronic profile management wherein the act of storing electronic profile information comprises receiving a preference term for the entity, the method further comprising disambiguating the received preference term. In the method, the act of disambiguating the received preference term may comprise identifying relevant documents in a content store using the received preference term and identifying a relevant keyword from at least one of the identified relevant documents, the method further comprising storing the relevant keyword in the storage medium as part of the preference. In the method, the content store may be selected from a group of content stores based in part on the preference. In the method, the act of computing the degree of relevance may comprise utilizing a neural network to compute the degree of relevance. The method may further comprise a system further comprising receiving feedback from an entity regarding the degree of relevance and modifying the neural network based on the feedback.

In a further aspect, an apparatus comprises a profiling system including a profile management system configured to receive profile information including at least one preference regarding entities, generate electronic profiles for each respective entity, and store the electronic profiles in an electronic profile storage medium. The system further includes a disambiguation engine configured to receive the at least one preference associated with a respective entity, identify terms related to the preference, and store at least one identified term in the electronic profile storage medium with the respective entity's electronic profile, and an analysis engine configured to receive a request to evaluate options for a first entity, the analysis engine configured to compute a relevance number for each of the respective options based on the electronic profile of the first entity.

The apparatus of the preceding aspect may further comprise a system wherein the electronic profiles include entries in a relational database, each respective electronic profile including a data table containing data associated with the entity and a related user preferences table containing preference IDs for each preference associated with the entity. In the system, the electronic profile may further include a user preferences terms table related to the user preferences table, the user preferences terms table containing term IDs for each term associated with a preference. In the system, the electronic profile may further include a preference terms table, the preference terms table related to the user preference terms table, the preference terms table containing at least one term associated with a respective term ID.

The apparatus of the preceding aspect may further comprise a system further including an indexing engine configured to index a plurality of content items according to terms contained in the plurality of content items and store the indexed content items in an indexed content store, and wherein the disambiguation engine is coupled to the indexed content store and configured to identify terms related to the preference by querying the indexed content store with the preference. In the system, the indexing engine may be configured to generate a plurality of indexed content stores, each corresponding to a respective category, the disambiguation engine configured to select a category-specific content store of the plurality of content stores.

The apparatus of the preceding aspect may further comprise a system wherein the analysis engine is configured to compute the relevance number for each of the respective options based in part on calculating term frequency and inverse document frequency numbers for each term in the preference for each content item.

The apparatus of the preceding aspect may further comprise a system wherein the relevance number is between 1 and 100.

The apparatus of the preceding aspect may further comprise a system wherein the analysis engine receives the request from a requestor and is configured to provide the requestor with at least a portion of the calculated relevance numbers, an indication of options associated with selected relevance numbers, or combinations thereof.

The apparatus of the preceding aspect may further comprise a system wherein the requestor is not permitted to access the profile information.

In a further aspect, an apparatus comprises a user device for use by an entity. The user device comprises a display, a processor coupled to the display, and a memory, the memory encoded with computer readable instructions that, when executed, cause the processor to receive content items and respective relevance scores associated with each content item, the relevance score computed based in part on a stored electronic profile associated with the entity, and render at least a portion of the content items on a display of the user device, the content items rendered to appear as though they were overlaid on a surface of a sphere, an angular distance between each of the content items and a center of the sphere based in part on the relevance number.

The apparatus of the preceding aspect may further comprise a device wherein the content items are arranged in latitudinal and longitudinal bands. In the device, the content items in one longitudinal band may have decreasing relevance numbers based on a distance from the center.

The apparatus of the preceding aspect may further comprise a device wherein the memory further encodes instructions causing the processor to rotate a visible selection of content items responsive to a user selection.

In a further aspect, a method for displaying content in a web browser for an entity comprises rendering a relevant content area within the web browser, accessing a web page in a web page area within the web browser, transmitting information regarding the web page to a profiling system configured to access an electronic profile of the entity, receiving at least one advertisement selected based at least in part on the electronic profile of the entity and the transmitted information, and displaying the received advertisement in the relevant content area.

The method of the preceding aspect may further comprise displaying content in a web browser for an entity wherein the relevant content area overlays the web page area.

The method of the preceding aspect may further comprise displaying content in a web browser for an entity wherein the web browser is displayed on a widescreen monitor thereby leaving unused space, the act of rendering the relevant content area comprising rendering the relevant content are in the unused space.

The method of the preceding aspect may further comprise displaying content in a web browser for an entity wherein the information regarding the web page comprises URL, metadata, a term contained in the web page, or combinations thereof.

The method of the preceding aspect may further comprise displaying content in a web browser for an entity further including receiving at least one link to a content item selected based in part on the electronic profile of the entity and the transmitted information, and displaying the link in the relevant content area.

The method of the preceding aspect may further comprise displaying content in a web browser for an entity including navigating to a second web page, transmitting information regarding the second web page to the profiling system, receiving a different advertisement selected based in part on the electronic profile of the entity and the transmitted information regarding the second web page, and updating the displayed advertisement with the different advertisement.

The method of the preceding aspect may further comprise displaying content in a web browser for an entity wherein the electronic profile comprises a relational database on an electronic storage medium.

The method of the preceding aspect may further comprise displaying content in a web browser for an entity including receiving an indication that a term on the web page is relevant to the electronic profile, and transmitting the term to the profiling system for inclusion in the electronic profile.

The method of the preceding aspect may further comprise displaying content in a web browser for an entity wherein the electronic profile includes permissions, and the act of transmitting occurs only if the permissions allow for communication with the web browser.

The method of the preceding aspect may further comprise displaying content in a web browser for an entity wherein the selected advertisement was selected based on a computed degree of relevance of the advertisement to the electronic profile and transmitted information. In the method, the degree of relevance may include a relevance number, the relevance number computed based on term frequency and inverse document frequency calculations for the advertisement using the electronic profile.

The method of the preceding aspect may further comprise displaying content in a web browser for an entity further comprising receiving a plurality of links, each to a respective content item and each selected based on a computed degree of relevance of the advertisement to the electronic profile and transmitted information, and displaying the links in the relevant content area.

In a further aspect, an apparatus comprises a user device for use by an entity, the user device comprising, a display, a processor, memory coupled to the processor, the memory encoding computer readable instructions that, when executed cause the processor to display network accessible content in a viewed content area of the display transmit information regarding the network accessible content to a profiling system configured to access an electronic profile of the entity receive at least one advertisement selected based at least in part on the electronic profile of the entity and the transmitted information, and display the received advertisement in a relevant content area of the display different than the viewed content area.

The apparatus of the preceding aspect may further comprise a device wherein the network accessible content comprises a web page and the viewed content area comprises a web page area.

The apparatus of the preceding aspect may further comprise a device wherein the display is a widescreen display and the relevant content area includes an area of the display that is unused when displaying a standard web page.

The apparatus of the preceding aspect may further comprise a device wherein the computer readable instructions comprise an Internet browser plug-in.

The apparatus of the preceding aspect may further comprise a device wherein the computer readable instructions further comprise instructions causing the processor to receive a link to a content item selected based at least in part on the electronic profile associated with the entity and the network accessible content.

The apparatus of the preceding aspect may further comprise a device wherein the computer readable instructions further include instructions causing the processor to transmit information regarding a second accessed network accessible content item to the profiling server, receive a second advertisement based in part on the electronic profile of the entity and the second accessed network accessible content item, and update the relevant content area of the display with the second advertisement.

In a further aspect, a method for selecting relevant advertisements for an entity. The method comprises receiving, at a first computing device, information regarding a network accessible content item accessed by an entity with a second computing device accessing, by the first computing device, a stored electronic profile associated with the entity, scoring a plurality of stored advertisements based on the stored electronic profile and the received network accessible content item information, selecting at least one of the plurality of stored advertisements based on their score, and transmitting the selected advertisements to the second computing device.

The method of the preceding aspect may further comprise selecting relevant advertisements for an entity wherein the network accessible content item comprises a web page. In the method, the information regarding the web page may comprise URL, metadata, a term or set of terms contained in the web page, or combinations thereof.

The method of the preceding aspect may further comprise scoring a plurality of content links based in part on the electronic profile of the entity and the transmitted information, selecting at least one of the plurality of content links based on their score, and transmitting the selected links to the second computing device.

The method of the preceding aspect may further comprise receiving, at the first computing device, information regarding a second network accessible content item accessed by the entity at the second computing device, scoring the plurality of stored advertisements based on the electronic profile of the entity and the transmitted information regarding the second network accessible content item, selecting at least one of the stored advertisements based on their score, and transmitting the selected advertisements to the second computing device.

The method of the preceding aspect may further comprise selecting relevant advertisements for an entity wherein the electronic profile comprises a relational database on an electronic storage medium.

The method of the preceding aspect may further comprise selecting relevant advertisements for an entity wherein the electronic profile includes permissions, and the act of transmitting occurs only if the permissions allow for communication with the second computing device.

The method of the preceding aspect may further comprise selecting relevant advertisements for an entity wherein the act of scoring includes computing a relevance number, the relevance number computed based on term frequency and inverse document frequency calculations for the advertisement using the electronic profile.

**Claims**

1. A system for providing notification of selected content from a provider to an entity, the system comprising:

   a user system having a user interface, a display, a memory, and a processor coupled to the user interface, display and memory, the memory having computer readable instructions that, when executed cause the processor to display a notification for selected content in response to receiving the same;
   a provider system configured to be in communication with the user system, the provider system having content storage, a memory, and a processor coupled to the content storage and the memory, the memory having computer readable instructions that, when executed, cause the processor to analyze scoring results for selected content stored in the content storage and generate electronic messages for one or more entities identified by the scoring results that provide information regarding relevance of the selected content to the one or more entities; and
   a profiling system configured to be in communication with the user system and the provider system, the profiling system having a profile storage configured to store electronic profiles for the one or more entities, the profiles associated with respective entities and including profile attributes for the respective entities, the profiling system further having a memory, and a processor coupled to the profile storage and memory, the memory encoded with computer readable instructions that, when executed, cause the processor to:

receive, from the provider system, information for the selected content,

access selected preferences of one or more electronic profiles, wherein the electronic profiles are not directly accessible to the provider,

compute a degree of at least one of relevance, irrelevance, or combinations thereof of the selected content for the one or more electronic profiles according to the information for the selected content and the selected preferences, profile attributes, or both, of the one or more electronic profiles to provide scoring results, and provide the scoring results to the provider system.

2. The system of claim 1 wherein the selected content stored in the content storage comprises at least one of information for retail items, promotions, programs, data or combinations thereof from the provider.

3. The system of claim 2 wherein the content stored in the content storage comprises at least one of gift cards, retailers, promoter channel or sponsor, personalization content and associated data, or combinations thereof.

4. The system of claim 2 wherein the content stored in the content storage comprises at least one of travel information, weather information, promotional information for various destinations, flight status, or combinations thereof.

5. The system of claim 1 wherein the content stored in the content storage comprises information for charitable organizations.

6. The system of claim 1 wherein the content stored in the content storage comprises social groups, social connections, or combinations thereof.

7. The system of claim 1 wherein the user system comprises a portable electronic device.

8. The system of claim 7 wherein the portable electronic device interacts with the provider system to determine at least one of presence or proximity of the user system to a marker of content in the content storage triggering the process of receipt, from the provider, of information on the content and computation of a degree of at least one of relevance, irrelevance, or combinations thereof.

9. The system of claim 1 wherein the provider system comprises a content scoring interface configured to provide access to the content stored in the content storage and receive the scoring results from the profiling system.

10. The system of claim 1 wherein the user device comprises a profile management interface configured to communicate with the profiling system to create, modify, or combinations thereof profile attributes of the electronic profiles.

11. The system of claim 1 wherein the memory of the profiling system encoded with computer readable instructions that, when executed, cause the processor to compute a degree of at least one of relevance, irrelevance, or combinations thereof comprises a memory encoded with computer readable instructions that, when executed, cause the processor to compute a degree of irrelevance for at least some of the electronic profiles.

12. The system of claim 1 wherein the memory of the provider system includes computer readable instructions that, when executed, further cause the processor of the provider system to request analysis of the selected content stored in the content storage to obtain the scoring results for the selected content.

13. The system of claim 1 wherein the memory of the profiling system is encoded with computer readable instructions that, when executed, further cause the processor of the profiling system to receive from the provider system a request for analysis of the selected content.

14. The system of claim 13, wherein the selected preferences are selected based, at least in part, on a context of the request for analysis.

15. A method of providing notification of selected content from a provider to an entity, the system comprising:

receiving at a profiling system from a provider system, information for selected content stored in a content storage of the provider system, and a request for analysis of the selected content for one or more entities to obtain scoring results for the selected content, the scoring results providing information regarding relevance of the selected content to the one or more entities, the entities being different from the provider;

accessing by the profiling system selected preferences of one or more electronic profiles stored in a profile storage of the profiling system, wherein the electronic profiles are not directly accessible to the provider system; computing by the profiling system a degree of at least one of relevance, irrelevance, or combinations thereof of the selected content for the one or more electronic profiles according to the information for the selected content and the selected preferences, profile attributes, or both, of the one or more electronic profiles to obtain scoring results for the selected content; and

providing by the profiling system to the provider system, the scoring results for analysis by the provider system of the scoring results and generating electronic messages for one or more entities identified based on the scoring results.

# Figure 1

**100**

Electronic Profile Storage 140

Profiling System 110

Profile Management System 115

Disambiguation Engine 120

Analysis Engine 125

Content Score Information

Profile Attribute

145c
145b
Provider Device 145
Content Scoring Interface 150

Content Storage 155

Selected Content Delivery

130c
130b
User Device 130
Content Viewer 137
Profile Management Interface 135

EP 2 624 151 A1

**200**

**User Table 201**

| UserID1 | Bob Smith | 555 Park Lane | 35 | Male | | | | |
|---|---|---|---|---|---|---|---|---|
| UserID2 | | | | Female | 5'10" | 180 | Medical | |
| UserID3 | | 329 Whistle Way | | | | | | Financial |

203 ⟋ ＼202

**User Preference Terms 220**

| SPORTS_PREFERENCE1 | TermID1 |
|---|---|
| | TermID2 |
| SPORTS_TRAVEL_PREFERENCE1 | TermID3 |
| SPORTS_PREFERENCE2 | TermID1 |
| | TermID4 |
| SPORTS_PREFERENCE3 | TermID5 |

**User Preferences 210**

| UserID1 | SPORTS_PREFERENCE1 | QualID1 |
|---|---|---|
| | SPORTS_TRAVEL_PREFERENCE1 | QualID1 |
| UserID2 | SPORTS_PREFERENCE2 | QualID2 |
| UserID3 | SPORTS_PREFERENCE3 | QualID1 |

＼203 ＼211 ＼212

**Preference Terms 230**

| TermID1 | Major League Baseball |
|---|---|
| TermID2 | Seattle Mariners |
| TermID3 | Fenway Park |
| TermID4 | New York Yankees |
| TermID5 | Derek Jeter |

**Preference Qualifiers 240**

| QualID1 | Like |
|---|---|
| QualID2 | Dislike |

# Figure 2

Qualifier Selector 308

Preference Entry Field 310

Disambiguation Selection Area 320

Content Area 330

Profile Management Interface 135

Display 305

Figure 3

Figure 4

List of category
specific expert
content — 512

Internet or
other digital source
of content — 510

Text Extraction — 514

Word normalization,
dictionary look-up and
common English term
removal — 516

Vector Space Word-
Frequency
Decomposition of
extracted text for each
document — 518

Indexed
Content
Store — 430

Figure 5

36

Preference
declaration —— 610

Select expert
content store —— 612

Rate documents in
expert content store
using preference
declaration —— 614

Determine most
distinctive related
key words in
significantly relevant
documents —— 616

Add Keyword to
Preference
Declaration
—— 622

←—Yes—— Useful Related
Keyword? —— 620

No

Save current
preference —— 624

# Figure 6

| | | | |
|---|---|---|---|
| 630 | 632 | 634 | 636 |
| Analyze current profile attributes for profile owning entity | Analyze profile attributes for other profile owning entities | Analyze entity behavior | Analyze associated entities, profiles and behavior |

Infer profile attributes based on analyses — 638

Add inferred profile attributes to and/or modify profile attributes in electronic profile for profile owning entity — 642

## Figure 7

```
┌─────────────────────┐
│                     │
│    Access stored    │
│    preference(s) in │──── 710
│   electronic profile│
│                     │
└─────────────────────┘
          │
          ▼
┌─────────────────────┐
│                     │
│                     │
│ Select content      │──── 712
│ index(es)           │
│ consistent with     │
│ context             │
│                     │
└─────────────────────┘
          │
          ▼
┌─────────────────────┐
│                     │
│ Score content in    │──── 714
│ indexes             │
│ based in part on    │
│ accessed preference(s)│
│                     │
└─────────────────────┘
          │
          ▼
┌─────────────────────┐
│                     │
│                     │──── 716
│                     │
│ Select relevant     │
│ content             │
│                     │
└─────────────────────┘
```

# Figure 8

Figure 9

840

Preference Entry Field
910

Babe, Ruth, grand jury,
Barry, Magowen, Bonds,
920      record

Seattle Mariners,
930 Mariners, Seattle

**Figure 10**

840

run

score

pitching

hit

~~Los Angeles~~

Los

Angeles

1010

**Figure 11**

EP 2 624 151 A1

101

Profiling System
110

Electronic Profile Storage 140

Profile Management System 115

Ad Storage 144

Content Source(s) 142

Disambiguation Engine 120

Link Storage 146

Analysis Engine 125

User Device 130

Content viewer 137

Profile Management Interface 135

Internet/ Web servers 139

Figure 12

EP 2 624 151 A1

Figure 13

EP 2 624 151 A1

EP 2 624 151 A1

Webpage content

Link One
Link Two
Link Three
Link Four
Link Five

Ad Area
1806

1804

1802

1820

Figure 14

```
┌─────────────────────────────────────────────────────────┐
│          Content viewer application initiated            │╲
└─────────────────────────────────────────────────────────┘  1905
                            │
                            ▼
┌─────────────────────────────────────────────────────────┐
│  Identity of entity using content viewer transmitted to  │╲
│                    analysis engine                       │  1910
└─────────────────────────────────────────────────────────┘
                            │
                            ▼
┌─────────────────────────────────────────────────────────┐
│  Electronic profile of the entity accessed by analysis   │╲
│                        engine                            │  1915
└─────────────────────────────────────────────────────────┘
                            │
                            ▼
┌─────────────────────────────────────────────────────────┐
│    Initial content selected by analysis engine based     │╲
│  on the accessed electronic profile and past browsing    │  1920
│                       activity                           │
└─────────────────────────────────────────────────────────┘
                            │
                            ▼
┌─────────────────────────────────────────────────────────┐
│     Initial content viewer screen rendered using         │╲
│  optional appearance configuration from the accessed     │  1925
│                   electronic profile                     │
└─────────────────────────────────────────────────────────┘
                            │
                            ▼
┌─────────────────────────────────────────────────────────┐
│                 Entity browses web page                  │╲
└─────────────────────────────────────────────────────────┘  1930
                            │
                            ▼
┌─────────────────────────────────────────────────────────┐
│  Information about the web page transmitted to the       │╲
│                    analysis engine                       │  1935
└─────────────────────────────────────────────────────────┘
                            │
                            ▼
┌─────────────────────────────────────────────────────────┐
│     Analysis engine selects content based on the         │╲
│    accessed electronic profile and web page information   │  1940
└─────────────────────────────────────────────────────────┘
                            │
                            ▼
┌─────────────────────────────────────────────────────────┐
│       Selected content displayed by content viewer       │╲
└─────────────────────────────────────────────────────────┘  1945
```

# Figure 15

# Figure 16

802 — Receive physician login for user account

Create and store physician profile
806

810 — Access physician profile

812 — Access additional information

818 — Monitor physician's interaction with Website and consider same in scoring process

814 — Score product information according to search criteria entered by physician and physician profile (and additional information)

822 — Provide list of relevant product information (based on scoring) to physician for review

834 — Provide list relevant additional medical information (based on scoring) to physician for review

830 — Score additional medical information according to search criteria entered by physician and physician profile (and additional information)

Retrieve product information selected by physician
826

838 — Retrieve additional medical information selected by physician

Update physician profile according to physician's selections
842

902 — Receive user login for user account

Create and store user profile — 906

910 — Access user profile

914 — Score charitable organizations according to search criteria entered by user and user profile

Provide list of relevant charitable organizations to user for review — 918

Update user profile according to user's selections and/or interaction

926 —

Retrieve information for charitable organization selected by user — 922

A

Figure 17A

A

930 — Index campaign or event for charitable organization

Access user profiles — 934

Score user profiles according to indexed campaign or event and user profiles — 938

942 — Identify user profiles according to score having likely interest in campaign or event

## Figure 17B

946 — Generate notification of campaign or event for identified users

1002 — Receive user login for user account

Create and store user profile — 1006

1010 — Access user profile

1012 — Access additional information

1014 — Score retail items according to search criteria entered by user and user profile (and additional information)

Provide list of relevant retail items (if available, and/or promotions, coupons, gift cards) to user for review — 1018

1026 — Update user profile according to user's selections

Retrieve information for retail items selected by user — 1022

B

## Figure 18A

B

1030 — Index retail items

Access user profiles — 1034

Score user profiles according to indexed retail items and user profiles — 1038

1042 — Identify user profiles according to score having likely interest in retail items

1046 — Generate notification of retail items for identified users

Figure 18B

**Figure 18C**

```
              ┌─────────────────────┐
   1050 ──────│ Access user's       │
              │ electronic profile  │
              └─────────────────────┘
                        │
                        ▼
              ┌─────────────────────┐
   1054 ──────│ Access additional   │
              │ information         │
              └─────────────────────┘
                        │
                        ▼
              ┌─────────────────────┐
              │ Score retail content│
              │ according to at     │
   1058 ──────│ least some of the   │
              │ user's profile      │
              │ attributes          │
              └─────────────────────┘
                        │
                        ▼
              ┌─────────────────────┐
              │                     │
   1062 ──────│ Provide scoring     │
              │ results to provider │
              │ device              │
              └─────────────────────┘
                        │
                        ▼
              ┌─────────────────────┐
              │                     │
              │ Provide relevant    │
   1066 ──────│ retail content for  │
              │ review by the user  │
              └─────────────────────┘
```

1102 — Receive user login for user account

Create and store user profile — 1106

1110 — Access user profile

1114 — Score social groups according to user profile (and search criteria entered by user if provided)

Provide list of relevant social groups (e.g., entities including individuals, groups of individuals) to user for review — 1118

Update user profile according to user's selections

1126 —

Retrieve information for social groups selected by user — 1122

C

# Figure 19A

C

1130 — Provide information for social group

Access user profiles — 1134

Score user profiles according to the information for the social groups and user profiles — 1138

1142 — Identify user profiles according to score having likely interest in the social groups

Figure 19B

1146 — Generate notification of the social group for identified users

```
                    ( C )
                      │
                      ▼
            ┌─────────────────────┐
1150──      │  Provide information│
            │  for user's current │
            │    social group     │
            └─────────────────────┘
                      │
                      ▼
            ┌─────────────────────┐
            │                     │
            │ Access user profiles│──1154
            │                     │
            └─────────────────────┘
                      │
                      ▼
            ┌─────────────────────┐
            │  Score user profiles│
            │   according to the  │
1158──      │ information for the │
            │ user's current      │
            │ social group and    │
            │    user profiles    │
            └─────────────────────┘
                      │
                      ▼
      ┌─────────────────────┐      ┌─────────────────────┐
      │ Identify user       │      │                     │
      │ profiles according  │      │ Provide list of     │
1162──│ to score having     │─────▶│ identified user     │── 1166
      │ likely interest in  │      │ profiles for review │
      │ the user's current  │      │     by the user     │
      │ social group        │      └─────────────────────┘
      └─────────────────────┘                 │
                                               ▼
      ┌─────────────────────┐      ┌─────────────────────┐
      │ Generate invitations│      │  Provide information│
      │ for users selected  │      │  for user profiles  │
1174──│ by the user to join │◀─────│  selected by by the │──1170
      │ the user's current  │      │        user         │
      │    social group     │      │                     │
      └─────────────────────┘      └─────────────────────┘
```

# Figure 19C

1306 — Create and store patient profile

↓

1310 — Access patient profile

↓

1312 — Access additional information

↓

1314 — Score drug and/or protocol according to patient profile (and additional information if accessed)

↓

Provide list of relevant drugs and/or protocols for review — 1318

↓

**Figure 20**     Retrieve information for selected drugs and/or protocol — 1322

**Figure 21**

1330 — Store electronic profile for traveler

1334 — Access traveler's electronic profile

1338 — Access additional information

1342 — Score content according to at least some of the traveler's profile attributes

Provide relevant content for review by the traveler. — 1346

Retrieve and provide selected content to the traveler — 1350

Figure 22A

Figure 22B

Figure 22C

Figure 22D

Qualifier Selector 308

Preference Entry Field 310

Disambiguation Selection Area 320

Content Area 330

Display 305

Profile Management Interface 135

EP 2 624 151 A1

Europäisches
Patentamt

European
Patent Office

Office européen
des brevets

## EUROPEAN SEARCH REPORT

Application Number

EP 13 16 6481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/216434 A1 (HAVELIWALA TAHER H [US] ET AL) 29 September 2005 (2005-09-29)<br>* abstract; figures 1-10 *<br>* paragraph [0003] - paragraph [0009] *<br>----- | 1-15 | INV.<br>G06F17/30 |

TECHNICAL FIELDS
SEARCHED      (IPC)

G06F

The present search report has been drawn up for all claims

| Place of search | Date of completion of the search | Examiner |
|---|---|---|
| Munich | 20 June 2013 | König, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 16 6481

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2013

| Patent document cited in search report | Publication date | Patent family member(s) | | Publication date |
|---|---|---|---|---|
| US 2005216434 A1 | 29-09-2005 | CN | 101814079 A | 25-08-2010 |
| | | EP | 1741024 A2 | 10-01-2007 |
| | | JP | 4664355 B2 | 06-04-2011 |
| | | JP | 2007531160 A | 01-11-2007 |
| | | KR | 20070007150 A | 12-01-2007 |
| | | KR | 20120073324 A | 04-07-2012 |
| | | KR | 20120130016 A | 28-11-2012 |
| | | US | 2005216434 A1 | 29-09-2005 |
| | | US | 2010169297 A1 | 01-07-2010 |
| | | US | 2012221568 A1 | 30-08-2012 |
| | | US | 2013103683 A1 | 25-04-2013 |
| | | WO | 2005098611 A2 | 20-10-2005 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 39293309 A